(19) **Europäisches Patentamt / European Patent Office / Office européen des brevets**

(11) **EP 4 737 419 A1**

(12) **EUROPEAN PATENT APPLICATION**
published in accordance with Art. 153(4) EPC

(43) Date of publication:
06.05.2026  Bulletin 2026/19

(21) Application number: 24832513.6

(22) Date of filing: 28.06.2024

(51) International Patent Classification (IPC):
$C03C\ 25/16^{(2006.01)}$  $C03C\ 25/40^{(2006.01)}$
$C01B\ 33/158^{(2006.01)}$  $B32B\ 17/04^{(2006.01)}$
$C01B\ 33/159^{(2006.01)}$

(52) Cooperative Patent Classification (CPC):
B32B 17/04; C01B 33/158; C01B 33/159;
C03C 25/16; C03C 25/40

(86) International application number:
PCT/KR2024/009126

(87) International publication number:
WO 2025/005737 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.06.2023  KR 20230083943
26.07.2023  KR 20230097729
01.11.2023  US 202318386103
01.11.2023  US 202318386108

(71) Applicant: LG Chem, Ltd.
Seoul 07336 (KR)

(72) Inventors:
• KIM, Mi Ri
  Daejeon 34122 (KR)
• KANG, Taegyeong
  Daejeon 34122 (KR)
• OH, Kyoungshil
  Daejeon 34122 (KR)

(74) Representative: Goddar, Heinz J.
Boehmert & Boehmert
Anwaltspartnerschaft mbB
Pettenkoferstrasse 22
80336 München (DE)

(54) **AEROGEL COMPOSITE**

(57)    The present invention relates to an aerogel composite that, when applied as an insulation material to a battery, an electronic device, a vehicle, an industrial device, a structure, or the like, maintains excellent insulation properties even when compressed and deformed by being subjected to pressure due to various causes.

**Description**

**TECHNICAL FIELD**

This application claims priority to Korean Patent Application No. 10-2023-0083943 filed on June 29, 2023, Korean Patent Application No. 10-2023-0097729 filed on July 26, 2023, and U.S. Patent Application Nos. 18/386,103 and 18/386,108 filed on November 1, 2023, the contents of which are incorporated by reference in their entirety.

The present invention relates to an aerogel composite and the application use thereof as a heat insulation material.

**BACKGROUND**

An aerogel is a super-porous, high specific surface area ($\geq$500 m$^2$/g) material having a porosity of approximately 90.0 % to 99.9% and a pore size in the range of 1 nm to 100 nm, and is a material having excellent properties ultralight weight/super-heat insulation/ultra-low dielectric, and the like. Accordingly, research on the development of aerogel materials as well as research on the application use thereof as transparent insulation materials and environmentally friendly high-temperature heat insulation materials, ultra-low dielectric thin films for highly integrated devices, catalysts and catalyst carriers, electrodes for supercapacitors, and electrode materials for seawater desalination have been actively conducted.

The biggest advantages of an aerogel are that it has super-insulation properties exhibiting a thermal conductivity of approximately 0.300 W/m·K or less, which is lower than that of a conventional organic heat insulation material such as Styrofoam, thereby solving the problems associated with the conventional organic heat insulation material, such as fire vulnerability and generation of harmful gases in case of a fire.

In general, an aerogel is produced by preparing a hydrogel from a silica precursor such as water glass and an alkoxysilane group (TEOS, TMOS, MTMS, and the like) and removing a liquid component inside the hydrogel without destroying a microstructure.

Particularly, a hydrophobic silica aerogel blanket in which a hydrophobic silica aerogel is formed in a fiber is a functional heat insulation material which prevents corrosion by moisture, and is widely used in construction or industrial fields, and in addition, the hydrophobic silica aerogel blanket may be used as a heat insulation material, thermal insulation material, or non-combustible material for aircraft, ships, automobiles, batteries, and the like. However, when the silica aerogel blanket is applied for the above uses, there have been problems in that when a pressurization environment is provided due to continuous thermal expansion of a device positioned adjacent thereto, or when a large pressure is applied from the surroundings during the installation of an aerogel heat insulation material, the aerogel structure collapses, so that the heat insulation properties are significantly reduced.

**DISCLOSURE**

**Technical problem**

The present invention provides an aerogel composite capable of maintaining constant heat insulation properties without significant degradation even when exposed to a pressurization environment.

However, the technical task to be achieved by the present invention is not limited to the aforementioned task, and other tasks that are not mentioned will be clearly understood by those skilled in the art from the following description.

**Technical Solution**

In accordance with some embodiments of the present invention, an aerogel composite includes a fiber substrate, and an aerogel including one or more pores, wherein when the aerogel composite is compressed by application of a pressure of any one of 3 bar, 9 bar, or 24 bar in a horizontal direction (transverse direction) with respect to a cross-section of the aerogel composite along in the horizontal direction (transverse direction), the heat transmission coefficient after the compression is not more than 1.8 times the heat transmission coefficient before the compression, and the heat transmission coefficient before and after the compression of the aerogel composite satisfies Equation 3 below.

{(Heat transmission coefficient (a) before and after compression - Average value (b) of heat transmission coefficients before and after compression)}= (Average value (b) of heat transmission coefficients before and after compression) X A     [Equation 3]

In Equation 3 above, the heat transmission coefficient (a) before and after compression means the heat transmission coefficient obtained after performing compression with a pressure of 0 bar, 3 bar, 9 bar, or 24 bar in the horizontal direction (transverse direction) with respect to the cross-section of the aerogel composite, the average value (b) of heat transmission coefficients before and after compression means the average value of the heat transmission coefficient an unpressurized aerogel composite, and the heat transmission coefficients obtained after performing compression with a pressure of pressure values of 3 bar, 9 bar, and 24 bar in the horizontal direction (transverse direction) with respect to the cross-section of the aerogel composite, and the A is a rational number of from - 0.25 to + 0.25.

When the aerogel composite is compressed by being applied with a pressure of 3 bar, 9 bar, and 24 bar in the horizontal direction (transverse direction) with respect to the cross-section of the aerogel composite, the heat transmission coefficient after the compression may be greater than 1 time, and not more than 1.8 times the heat transmission coefficient before the compression.

When the aerogel composite is applied with a pressure of 3 bar in the horizontal direction (transverse direction) with respect to the cross-section of the aerogel composite, the heat transmission coefficient after the compression may be not more than 1.45 times the heat transmission coefficient before the compression.

When the aerogel composite is applied with a pressure 3 bar, 9 bar, and 24 bar in the horizontal direction (transverse direction) with respect to the cross-section of the aerogel composite, the compression recovery rate represented by Equation 1 below may be 60% or greater.

Compression recovery rate (%) = {(Cross-sectional thickness of aerogel composite after compression)/(Cross-sectional thickness of aerogel composite before compression)} X 100.  [Equation 1]

The heat transmission coefficient obtained after performing compression with a pressure of 3 bar, 9 bar, and 24 bar in the horizontal direction (transverse direction) with respect to the cross-section of the aerogel composite may satisfy Equation 4 below.

(Heat transmission coefficient (c) after compression - Average value (d) of heat transmission coefficients after compression) = (Average value (d) of heat transmission coefficients after compression) X B  [Equation 4]

In Equation 4 above, the heat transmission coefficient (c) after compression means the heat transmission coefficient obtained after performing compression with a pressure of 3 bar, 9 bar, or 24 bar in the horizontal direction (transverse direction) with respect to the cross-section of the aerogel composite, the average value (d) of heat transmission coefficients after compression means the average value of heat transmission coefficients obtained after performing compression by applying pressures of 3 bar, 9 bar, and 24 bar, respectively, in the horizontal direction (transverse direction) with respect to the cross-section of the aerogel composite, and the B is a rational number of from - 0.25 to + 0.25.

A change rate (C) of heat transmission coefficient after performing compression per unit application pressure represented by Equation 5 below on the aerogel composite may be a rational number of from - 0.100 to + 0.100.

C = (Heat transmission coefficient after performing compression with pressure of x - Heat transmission coefficient after performing compression with pressure of y)/(x - y)  [Equation 5]

In Equation 5 above, x and y are each independently any one pressure value (unit bar) of 3 bar, 9 bar, and 24 bar, and are different pressure values from each other.

The aerogel may include pores having a pore diameter of 30 nm or less at 30% to 45% of the pore volume of the framework structure. The aerogel may include pores having a pore diameter of from 0.1 nm to 30 nm at 30% to 45% of the pore volume of the framework structure.

The aerogel composite may have a density of 0.05 g/cm$^3$ to 0.50 g/cm$^3$.

In accordance with another exemplary embodiment of the present invention, a heat insulation member includes the aerogel composite provided in the present invention.

The heat insulation member may further include a support member positioned on at least one surface of an upper surface and a lower surface of the aerogel composite.

## ADVANTAGEOUS EFFECTS

When applied as a heat insulation material for batteries, electronic devices, automobiles, industrial devices, structures, or the like, an aerogel composite provided in the present invention may maintain an excellent level of heat insulation properties without significant degradation even when compressed and deformed by a pressure applied to the aerogel composite due to expansion of various devices or structures positioned adjacent thereto, or other causes.

## BEST MODE

In accordance with some embodiments of the present invention, an aerogel composite includes a fiber substrate, and an aerogel including one or more pores, wherein when the aerogel composite is compressed by application of a pressure of 3 bar, 9 bar, and 24 bar in a horizontal direction (transverse direction) with respect to a cross-section of the aerogel composite, the heat transmission coefficient after the compression is not more than 1.8 times the heat transmission coefficient before the compression, and the heat transmission coefficient before and after the compression of the aerogel composite satisfies Equation 3 below.

{(Heat transmission coefficient (a) before and after compression - Average value (b) of heat transmission coefficients before and after compression)}= (Average value (b) of heat transmission coefficients before and after compression) X A          [Equation 3]

In Equation 3 above, the heat transmission coefficient (a) before and after compression means the heat transmission coefficient obtained after performing compression with a pressure of 0 bar, 3 bar, 9 bar, or 24 bar in the horizontal direction (transverse direction) with respect to the cross-section of the aerogel composite, the average value (b) of heat transmission coefficients before and after compression means the average value of the heat transmission coefficient of an unpressurized aerogel composite, and the heat transmission coefficients obtained after performing compression with a pressure of respective pressure values of 3 bar, 9 bar, and 24 bar in the horizontal direction (transverse direction) with respect to the cross-section of the aerogel composite, and the A is a rational number of from - 0.25 to + 0.25.

When the aerogel composite is compressed by being applied with a pressure of 3 bar, 9 bar, and 24 bar in the horizontal direction (transverse direction) with respect to the cross-section of the aerogel composite, the heat transmission coefficient after the compression may be greater than 1 time, and not more than 1.8 times the heat transmission coefficient before the compression.

When the aerogel composite is applied with a pressure of 3 bar in the horizontal direction (transverse direction) with respect to the cross-section of the aerogel composite, the heat transmission coefficient after the compression may be not more than 1.45 times the heat transmission coefficient before the compression.

When the aerogel composite is applied with a pressure 3 bar, 9 bar, and 24 bar in the horizontal direction (transverse direction) with respect to the cross-section of the aerogel composite, the compression recovery rate represented by Equation 1 below may be 60% or greater.

Compression recovery rate (%) = {(Cross-sectional thickness of aerogel composite after compression)/(Cross-sectional thickness of aerogel composite before compression)} X 100.          [Equation 1]

The heat transmission coefficient obtained after performing compression with a pressure of 3 bar, 9 bar, and 24 bar in the horizontal direction (transverse direction) with respect to the cross-section of the aerogel composite may satisfy Equation 4 below.

(Heat transmission coefficient (c) after compression - Average value (d) of heat transmission coefficients after compression) = (Average value (d) of heat transmission coefficients after compression) X B          [Equation 4]

In Equation 4 above, the heat transmission coefficient (c) after compression means the heat transmission coefficient obtained after performing compression with a pressure of 3 bar, 9 bar, or 24 bar in the horizontal direction (transverse direction) with respect to the cross-section of the aerogel composite, the average value (d) of heat transmission coefficients after compression means the average value of heat transmission coefficients obtained after performing compression by applying pressures of 3 bar, 9 bar, and 24 bar, respectively, in the horizontal direction (transverse direction) with respect to the cross-section of the aerogel composite, and the B is a rational number of from - 0.25 to + 0.25.

A change rate (C) of heat transmission coefficient after performing compression per unit application pressure represented by Equation 5 below on the aerogel composite may be a rational number of from - 0.100 to + 0.100.

$$C = \text{(Heat transmission coefficient after performing compression with pressure of } x - \text{Heat transmission coefficient after performing compression with pressure of } y)/(x - y) \qquad \text{[Equation 5]}$$

In Equation 5 above, x and y are each independently any one pressure value (unit bar) of 3 bar, 9 bar, and 24 bar, and are different pressure values from each other.

The aerogel may include pores having a pore diameter of 30 nm or less at 30% to 40% of the pore volume of the framework structure.

The aerogel composite may have a density of $0.05 \ g/cm^3$ to $0.50 \ g/cm^3$.

In accordance with another exemplary embodiment of the present invention, a heat insulation member includes the aerogel composite provided in the present invention.

The heat insulation member may further include a support member positioned on at least one surface of an upper surface and a lower surface of the aerogel composite.

## MODE FOR INVENTION

Hereinafter, the present invention will be described in more detail to allow for a clearer understanding of the present invention. At this time, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In accordance with some embodiments of the present invention, an aerogel composite includes a fiber substrate, and an aerogel including one or more pores.

An "aerogel" includes a three-dimensional network structure in which a plurality of aerogel particles having a size of approximately 2 nm to 20 nm are agglomerated or combined to form a plurality of open pores.

An aerogel may be an inorganic silica aerogel formed from a silicon alkoxide-based compound or water glass as a precursor. The aerogel may be consisted of silica, methylsilylated silica, dimethylsilylated silica, trimethylsilylated silica, or mixtures thereof. The aerogel may be an aerogel in which at least portion of $SiO_2$ on a surface of a $SiO_2$ network has a bond structure $Si-O-SiO_2(CH_3)$, $Si-O-SiO(CH_3)_2$ or $Si-O-Si(CH_3)_3$. A process for producing an aerogel will be described in detail below.

The "aerogel particle" is a particle in the form of an individual solid unit constituting an aerogel, and may be powder, a bead, a fine powder material, a granule, a pellet, an agglomerate, a fiber, a flake, and the like, and the shape thereof may be spherical, hemispherical, circular, semicircular, polygonal, cubical, rodlike, polyhedral, irregular, and the like. The aerogel particles may have an average particle diameter of approximately 10 nm to 2,000 nm, 10 nm to 1,500 nm, or 10 nm to 1,000 nm, but are not limited thereto. The average particle size may be measured by any means known to those skilled in the art, such as scanning electron microscopy, dynamic light scattering, optical microscopy, size exclusion, or the like, but is not limited thereto.

The aerogel may have a skeletal structure including mesopores, and may include micropores or macropores in addition to the mesopores. Here, the "mesopore" is a pore having an average pore diameter in the range of approximately 2 nm to approximately 50 nm, the "macropore" is a pore having an average pore diameter in the range of greater than approximately 50 nm, and the "micropore" is a pore having an average pore diameter in the range of less than approximately 2 nm. The aerogel may include mesopores of at least 50%, at least 60%, at least 70%, at least 80%, at least 90%, at least 95%, at least 96%, at least 97%, at least 98%, at least 99%, or 100% of the pore volume of the skeletal structure. In one embodiment, the aerogel may include mesopores. In one embodiment, the aerogel may include mesopores and micropores. The pore size may be measured by any means known to those skilled in the art, such as a gas adsorption experiment, mercury infiltration, capillary flow porometry, positron annihilation lifetime spectroscopy (PALS), or the like, but is not limited thereto.

In an aerogel, pores having a pore diameter of 30 nm or less are not destroyed or have a low destruction rate even when the aerogel is compressed by a high pressure (for example, a pressure of 37 bar or less, 33 bar or less, or 30 bar or less). Accordingly, by allowing pores having a pore diameter of 30 nm or less to be included in an aerogel at a predetermined ratio, the heat transmission coefficient of an aerogel composite may be maintained within a predetermined range even under a pressurization environment compared to that before the pressurization.

Specifically, the aerogel may include pores having a pore diameter of 30 nm or less, preferably from 0.1 nm to 30 nm at 25% or greater, 26% or greater, 27% or greater, 28% or greater, 29% or greater, 30% or greater, or 31% or greater of the pore volume of the skeletal structure, and may include the pores at 50% or less, 49% or less, 48% or less, 47% or less, 46% or less, 45% or less, 44% or less, 43% or less, 41% or less, or 40% or less, preferably 25% to 45%, 25% to 40%, 30% to 45%, or 30% to 40%, but is not limited thereto. The aerogel may include pores having a pore diameter of 30 nm or less at 30% to 45% of the pore volume of the skeletal structure. The aerogel may include pores having a pore diameter of 30 nm or less at 37.5% to 38.5% of the pore volume of the skeletal structure. The aerogel may include pores having a pore diameter of from 0.1 nm to 30 nm at 30% to 45% of the pore volume of the skeletal structure.

In addition, the aerogel may include pores having a pore diameter of greater than 30 nm at 50% or greater, 51% or greater, 52% or greater, 53% or greater, 54% or greater, 55% or greater, 56% or greater, 57% or greater, 58% or greater, 59% or greater, or 60% or greater of the pore volume of the skeletal structure, and may include the pores at 75% or less, 74% or less, 73% or less, 72% or less, 71% or less, 70% or less, or 69% or less, preferably 55% to 75%, 60% to 75%, 55% to 70%, or 60% to 70% , but is not limited thereto.

The porosity of the aerogel may be 80% or greater, 85% or greater, 88% or greater, 89% or greater, 90% or greater, 91% or greater, 92% or greater, 93% or greater, 94% or greater, 95% or greater, 96% or greater, 97% or greater, 98% or greater, or 99% or greater, preferably 80% or greater, or 99.9% or less, but is not limited thereto.

The aerogel composite has a structure in which at least some of a plurality of aerogel particles are dispersed, preferably combined, on the surface of a substrate including a fiber, and at the same time, has a structure in which at least some of the plurality of aerogel particles are dispersed, preferably positioned, in an empty space between discrete fibers in the substrate. Examples of the above substrate may be discrete fibers, a film, a sheet, a net, a fiber, a porous body, a foam, a non-woven body, or a laminate of two or more layers thereof. In addition, depending on the application thereof, the substrate may have surface roughness formed or patterned on the surface thereof.

The fiber substrate may be polyester, polyolefin terephthalate, poly(ethylene) naphthalate, polycarbonate (e.g., rayon, nylon), cotton (e.g., Lycra® manufactured by DuPont), carbon (e.g., graphite), polyacrylonitrile (PAN), oxidized PAN, non-carbonized heat-treated PAN (such as those made of SGL carbon), a glass fiber-based material (S-glass, 901 glass, 902 glass, 475 glass, E-glass, etc.), a silica-based fiber such as Quartz (e.g., Quartzel® manufactured by Saint-Gobain), Q-Fiber® felt (manufactured by Johns Manville), Saffil (manufactured by Saffil), Durablanket (manufactured by Unifrax) and other silica fibers, Duraback® (manufactured by Carborundum), a polyaramid fiber such as Kevlar®, Nomex®, and Sontera® (all manufactured by DuPont), CONEX (manufactured by Teijin), a polyolefin such as Tyvek® (manufactured by DuPont), Dyneema (manufactured by DSM), Spectra® (manufactured by Honeywell), other polypropylene fibers such as Typar® and Xavan® (both manufactured by DuPont), a fluoropolymer such as PTFE under the trade name Teflon® (manufactured by DuPont), Goretex® (manufactured by W.L. GORE), a silicon carbide fiber such as NICALCON (manufactured by COI Ceramics), a ceramic fiber such as NEXTEL (manufactured by 3M), an acrylic polymer, wool, silk, hemp, leather, a suede fiber, a PBO fiber Zylong® (manufactured by Toyobo), a liquid crystal material such as VECTAN (manufactured by Hoechst), a cambrel fiber (manufactured by DuPont), polyurethane, polyamide, a wool fiber, boron, aluminum, iron, a stainless steel fiber and other thermoplastic resins such as PEEK, PES, PET, PEK, PPS, and the like, but any fiber may be used without limitation as long as it is a fiber which includes spaces or voids into which an aerogel may be easily inserted, thereby improving heat insulation performance.

The thickness of the fiber substrate may be 0.5 nm to 20 mm, but is not limited thereto.

The aerogel composite may be a mixture of a fiber substrate and an aerogel from the upper surface to the lower surface thereof, but is not limited thereto.

In addition, at least a portion of the upper surface or lower surface, preferably the entire surface of the aerogel composite may have a flat shape. Here, the "flat shape" means that irregularities are not formed by an intentional embossing or coating process. By forming the upper and lower surfaces of the aerogel composite to be flat as described above, it is possible to increase the ease of work in stacking a support member such as a sheet on the surface of the upper and lower surfaces in the future, and increase the adhesion retention rate of the support member. In addition, even if the aerogel composite itself is directly applied as a heat insulation member without a support member, it is preferable in terms of reducing frictional force with the surface of a device positioned adjacent thereto.

The aerogel composite has excellent elasticity, flexibility, and strength, and thus, has excellent elastic recovery force even when the aerogel composite is compressed and deformed under a pressurization environment, and may maintain a high level of heat insulation properties.

The density of the aerogel composite may be 0.05 g/cm$^3$ to 0.50 g/cm$^3$, 0.05 g/cm$^3$ to 0.35 g/cm$^3$, 0.05 g/cm$^3$ to 0.30 g/cm$^3$, 0.10 g/cm$^3$ to 0.30 g/cm$^3$, or 0.15 g/cm$^3$ to 0.30 g/cm$^3$, but is not limited thereto. The density of the aerogel composite may be 0.05 g/cm$^3$ to 0.35 g/cm$^3$. The density of the aerogel composite may be 0.10 g/cm$^3$ to 0.30 g/cm$^3$. The density of the aerogel composite may be 0.15 g/cm$^3$ to 0.30 g/cm$^3$. The density of the aerogel composite may be 0.200 g/cm$^3$ to 0.205 g/cm$^3$.

When the aerogel composite is applied with a pressure of 1 bar or greater, 2 bar or greater, 3 bar or greater, 4 bar or greater, 5 bar or greater, 6 bar or greater, 7 bar or greater, 8 bar or greater, 9 bar or greater, 10 bar or greater, 15 bar or greater, 20 bar or greater, 25 bar or greater, 30 bar or greater, 35 or greater, or 40 bar or greater, and 50 bar or less, 45 bar or less, 40 bar or less, 35 bar or less, 30 bar or less, 25 bar or less, 20 bar or less, 15 bar or less, 10 bar or less, 9 bar or less, 8 bar or less, 7 bar or less, 6 bar or less, 5 bar or less, 4 bar or less, 3 bar or less, or 2 bar or less in the horizontal direction (transverse direction) with respect to the cross-section of the aerogel composite, the compression recovery rate may be 45% or greater, 50% or greater, 55% or greater, 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, 92% or greater, 94% or greater, 95% or greater, 96% or greater, 97% or greater, 98% or greater, or 99% or greater.

As shown in Equation 1 below, the "compression recovery rate" means the percentage of the cross-sectional thickness of the aerogel composite after a predetermined time has elapsed after compression compared to the cross-sectional thickness of the aerogel composite before the compression. Here, the predetermined time may be, for example, 1 second or more, 5 seconds or more, 10 seconds or more, 30 seconds or more, 1 minute or more, 5 minutes or more, 10 minutes or more, 20 minutes or more, 30 minutes or more, 40 minutes or more, 50 minutes or more, 1 hour or more, 2 hours or more, 4 hours or more, 6 hours or more, 8 hours or more, 10 hours or more, 12 hours or more, 24 hours or more, 48 hours or more, or 96 hours or more, but is not limited thereto.

$$\text{Compression recovery rate (\%)} = \{(\text{Cross-sectional thickness of aerogel composite after compression})/(\text{Cross-sectional thickness of aerogel composite before compression})\} \times 100 \qquad \text{[Equation 1]}$$

The "pressure" value means the value of a pressure actually applied to a unit area of the aerogel composite when a pressure is applied in the horizontal direction (transverse direction) with respect to the cross-section of the aerogel composite using a press device or the like. When a pressure is applied in the horizontal direction (transverse direction) with respect to the cross-section of the aerogel composite using a press device including a cylinder, the actual pressure value may mean, as shown in Equation 2 below, a value obtained by dividing the product of a cross-sectional area of the cylinder and a set pressure value by the area of a specimen, but is not limited thereto, and may be calculated differently depending on each device or as set by a manufacturer.

$$\text{Actual pressure value} = (\text{Radius(cm) of inner diameter of cylinder of press equipment} \times \text{Radius(cm) of inner diameter of cylinder of press equipment} \times 3.14 \times \text{set pressure value}) / (\text{Area(cm}^2\text{) of specimen}) \qquad \text{[Equation 2]}$$

In Equation 2 above, the unit of the radius of the inner diameter of a cylinder may be, for example, cm, the unit of the area of a specimen may be, for example, cm$^2$, and the unit of a set pressure value may be bar or kgf, but is not limited thereto.

The time during which a pressure is applied to the aerogel composite is not particularly limited, but may be, for example, 1 second or more, 5 seconds or more, 10 seconds or more, 30 seconds or more, 1 minute or more, 5 minutes or more, 10 minutes or more, 20 minutes or more, 30 minutes or more, 40 minutes or more, 50 minutes or more, 1 hour or more, or 2 hours or more, and 24 hours or less, 12 hours or less, 10 hours or less, 8 hours or less, 6 hours or less, 4 hours or less, 2 hours or less, 1 hour or less, 50 minutes or less, 40 minutes or less, 30 minutes or less, 20 minutes or less, 10 minutes or less, 5 minutes or less, 1 minute or less, 30 seconds or less, 10 seconds or less, or 5 seconds or less, but is not limited thereto.

Applying a pressure to the aerogel composite in a transverse direction means applying a pressure in a horizontal direction to the cross-section of the aerogel composite, specifically in a direction from the upper surface to the lower surface or from the lower surface to the upper surface, i.e., in the thickness direction.

When the aerogel composite is applied with a pressure of 3 bar or greater in the horizontal direction (transverse direction) with respect to the cross-section of the aerogel composite, the compression recovery rate may be 70% or greater, 72% or greater, 74% or greater, 76% or greater, 78% or greater, 80% or greater, 82% or greater, 84% or greater, 86% or greater, 88% or greater, 90% or greater, 92% or greater, 94% or greater, 95% or greater, 96% or greater, 97% or greater, 98% or greater, or 99% or greater.

When the aerogel composite is applied with a pressure of 5 bar or greater, 10 bar or greater, 15 bar or greater, 20 bar or greater, 25 bar or greater, 30 bar or greater, or 35 bar or greater in the horizontal direction (transverse direction) with respect to the cross-section of the aerogel composite, the compression recovery rate may be 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, 92% or greater, 94% or greater, 95% or greater, 96% or greater, 97% or greater, 98% or greater, or 99% or greater.

When the aerogel composite is applied with a pressure of 3 bar in the horizontal direction (transverse direction) with respect to the cross-section of the aerogel composite, the compression recovery rate may be 70% or greater, 72% or greater, 74% or greater, 76% or greater, 78% or greater, 80% or greater, 82% or greater, 84% or greater, 86% or greater, 88% or greater, 90% or greater, 92% or greater, 94% or greater, 95% or greater, 96% or greater, 97% or greater, 98% or greater, or 99% or greater, preferably 70% or greater, 72% or greater, 74% or greater, 76% or greater, 78% or greater, 80% or greater, 82% or greater, 84% or greater, 86% or greater, 88% or greater, 90% or greater, or 92% or greater, and more preferably 80% or greater, 82% or greater, 84% or greater, 86% or greater, 88% or greater, 90% or greater, or 92% or greater.

When the aerogel composite is applied with a pressure of 9 bar in the horizontal direction (transverse direction) with respect to the cross-section of the aerogel composite, the compression recovery rate may be 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, 92% or greater, 94% or greater, 95% or greater, 96% or greater, 97% or greater, 98% or greater, or 99% or greater, preferably 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, or 92% or greater, and more preferably 70% or greater, 72% or greater, 74% or greater, 76% or greater, or 78% or greater.

When the aerogel composite is applied with a pressure of 15 bar in the horizontal direction (transverse direction) with respect to the cross-section of the aerogel composite, the compression recovery rate may be 55% or greater, 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, 92% or greater, 94% or greater, 95% or greater, 96% or greater, 97% or greater, 98% or greater, or 99% or greater, preferably 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, or 92% or greater, and more preferably 70% or greater, 72% or greater, 74% or greater, or 76% or greater.

When the aerogel composite is applied with a pressure of 24 bar in the horizontal direction (transverse direction) with respect to the cross-section of the aerogel composite, the compression recovery rate may be 55% or greater, 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, 92% or greater, 94% or greater, 95% or greater, 96% or greater, 97% or greater, 98% or greater, or 99% or greater, preferably 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, or 92% or greater, and more preferably 70% or greater, 72% or greater, 74% or greater, or 76% or greater.

When the aerogel composite is applied with a pressure of 30 bar in the horizontal direction (transverse direction) with respect to the cross-section of the aerogel composite, the compression recovery rate may be 53% or greater, 55% or greater, 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, 92% or greater, 94% or greater, 95% or greater, 96% or greater, 97% or greater, 98% or greater, or 99% or greater, preferably 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, or 92% or greater, and more preferably 68% or greater, 70% or greater, 72% or greater, 74% or greater, or 76% or greater.

When the aerogel composite is applied with a pressure of 33 bar in the horizontal direction (transverse direction) with respect to the cross-section of the aerogel composite, the compression recovery rate may be 53% or greater, 55% or greater, 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, 92% or greater, 94% or greater, 95% or greater, 96% or greater, 97% or greater, 98% or greater, or 99% or greater, preferably 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, or 92% or greater, and more preferably 68% or greater, 70% or greater, 72% or greater, 74% or greater, or 76% or greater.

When the aerogel composite is applied with a pressure of 37 bar in the horizontal direction (transverse direction) with respect to the cross-section of the aerogel composite, the compression recovery rate may be 50% or greater, 55% or greater, 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, 92% or greater, 94% or greater, 95% or greater, 96% or greater, 97% or greater, 98% or greater, or 99% or greater, preferably 55% or greater, 60% or greater, 62% or greater, 64% or greater, 66% or greater, 68% or greater, 70% or greater, 72% or greater, 74% or greater, 76% or greater, 78% or greater, 80% or greater, 82% or greater, 84% or greater, 86% or greater, 88% or greater, 90% or greater, or 92% or greater, and more preferably 55% or greater, 60% or greater, or 62% or greater.

The thickness of the aerogel composite before compression may be 20 mm or less, 15 mm or less, 14 mm or less, 13 mm or less, 12 mm or less, 11 mm or less, 10 mm or less, 9 mm or less, 8 mm or less, 7 mm or less, 6 mm or less, 5 mm or less, 4 mm or less, 3 mm or less, 2 mm or less, or 1 mm or less, and 0.5 mm or greater, 1 mm or greater, or 2 mm or greater, and the thickness may be suitably adjusted by adjusting the thickness of a substrate or the amount of aerogel sol impregnated into the substrate according to the application use of the aerogel composite.

When the aerogel composite is applied with a pressure of 1 bar or greater, 2 bar or greater, 3 bar or greater, 4 bar or greater, 5 bar or greater, 6 bar or greater, 7 bar or greater, 8 bar or greater, 9 bar or greater, 10 bar or greater, 15 bar or greater, 20 bar or greater, 25 bar or greater, 30 bar or greater, 35 or greater, or 40 bar or greater, and 50 bar or less, 45 bar or less, 40 bar or less, 35 bar or less, 30 bar or less, 25 bar or less, 20 bar or less, 15 bar or less, 10 bar or less, 9 bar or less, 8 bar or less, 7 bar or less, 6 bar or less, 5 bar or less, 4 bar or less, 3 bar or less, or 2 bar or less in the horizontal direction (transverse direction) with respect to the cross-section of the aerogel composite, the heat transmission coefficient after the compression may be 3 times or less, 2.9 times or less, 2.8 times or less, 2.7 times or less, 2.6 times or less, 2.5 times or less, 2.4 times or less, 2.3 times or less, 2.2 times or less, 2.1 times or less, 2 times or less, 1.9 times or less, 1.8 times or less, 1.7 times or less, 1.6 times or less, 1.5 times or less, 1.4 times or less, 1.3 times or less, 1.2 times or less, 1.1 times or less, 1.05 times or less, 1.04 times or less, 1.03 times or less, 1.02 times or less, or 1.01 times or less, and additionally, 1 time or greater, or greater than 1 time the heat transmission coefficient before the compression.

The "heat transmission coefficient" refers to the transfer of heat from an air layer to an air layer through a solid object, and means the amount of heat flowing when a cross-sectional area of 1 m$^2$ is at a temperature difference of 1 °C per unit time, which is a value obtained by dividing the thermal conductivity of an object the thickness of the object. The amount of heat transfer of an object is affected by the thermal conductivity and thickness of the object, and the greater the thermal conductivity and the thinner the thickness, the greater the amount of heat transfer. Therefore, in order to achieve good heat insulation performance, the thermal conductivity is required to be small and the thickness is required to be large. However, when a pressure is applied to an elastic object, such as an aerogel composite, the thermal conductivity may change after the pressurization, and the thickness may also change. That is, unless the object is a completely elastic material, the thickness thereof inevitably decreases after the pressurization, but if the thermal conductivity does not change, the total amount of heat transfer increases due to the thickness reduction. That is, it is inevitable that the heat insulation performance will be degraded. Therefore, whether the heat insulation performance is maintained after the pressurization is not confirmed only with the thermal conductivity after the pressurization, but confirmed with the heat transmission coefficient, which considers both the thermal conductivity after pressurization and the thickness after pressurization. Even if the thermal conductivity decreases or is maintained after pressurization, if the thickness is significantly reduced after the pressurization, the heat transmission coefficient and the total amount of heat transfer inevitably increase significantly.

The aerogel composite does not change significantly in both thermal conductivity and thickness even after pressurization, so that the increase rate of heat transmission coefficient compared to that before the pressurization is not high, and the heat insulation performance may be maintained at an excellent level without significant degradation even after the pressurization.

The "heat transmission coefficient after compression" means the ratio of thermal conductivity to a cross-sectional thickness of the aerogel composite measured after a predetermined time has elapsed after performing compression by applying a specific level of pressure to the aerogel composite in a horizontal direction (transverse direction) with respect to a cross-section of the aerogel composite. Here, the predetermined time may be, for example, 1 second or more, 5 seconds or more, 10 seconds or more, 30 seconds or more, 1 minute or more, 5 minutes or more, 10 minutes or more, 20 minutes or more, 30 minutes or more, 40 minutes or more, 50 minutes or more, 60 minutes or more, 2 hours or more, 4 hours or more, 6 hours or more, 8 hours or more, 10 hours or more, 12 hours or more, 24 hours or more, 48 hours or more, or 96 hours or more, but is not limited thereto.

The time during which a pressure is applied to the aerogel composite is not particularly limited, but may be, for example, 1 second or more, 5 seconds or more, 10 seconds or more, 30 seconds or more, 1 minute or more, 5 minutes or more, 10 minutes or more, 20 minutes or more, 30 minutes or more, 40 minutes or more, 50 minutes or more, 1 hour or more, or 2 hours or more, and 24 hours or less, 12 hours or less, 10 hours or less, 8 hours or less, 6 hours or less, 4 hours or less, 2 hours or less, 1 hour or less, 50 minutes or less, 40 minutes or less, 30 minutes or less, 20 minutes or less, 10 minutes or less, 5 minutes or less, 1 minute or less, 30 seconds or less, 10 seconds or less, or 5 seconds or less, but is not limited thereto.

When the aerogel composite is applied with a pressure of 3 bar or greater, 5 bar or greater, 10 bar or greater, 15 bar or greater, 20 bar or greater, 25 bar or greater, 30 bar or greater, or 35 bar or greater in the horizontal direction (transverse direction) with respect to the cross-section of the aerogel composite, the heat transmission coefficient after the compression may be 3 times or less, 2.9 times or less, 2.8 times or less, 2.7 times or less, 2.6 times or less, 2.5 times or less, 2.4 times or less, 2.3 times or less, 2.2 times or less, 2.1 times or less, 2 times or less, 1.9 times or less, 1.8 times or less, 1.7 times or less, 1.6 times or less, 1.5 times or less, 1.4 times or less, 1.3 times or less, 1.2 times or less, 1.1 times or less, 1.05 times or less, 1.04 times or less, 1.03 times or less, 1.02 times or less, or 1.01 times or less the heat transmission coefficient before the compression.

When the aerogel composite is applied with a pressure of any one pressure value of 3 bar to 33 bar in the horizontal direction (transverse direction) with respect to the cross-section of the aerogel composite, the heat transmission coefficient after the compression may be 2.0 times or less, 1.9 times or less, 1.8 times or less, 1.7 times or less, 1.6 times or less, 1.5 times or less, 1.4 times or less, 1.3 times or less, 1.2 times or less, 1.1 times or less, 1.05 times or less, 1.04 times or

**EP 4 737 419 A1**

less, 1.03 times or less, 1.02 times or less, or 1.01 times or less the heat transmission coefficient before the compression.

When the aerogel composite is applied with a pressure of any one pressure value of 3 bar to 24 bar in the horizontal direction (transverse direction) with respect to the cross-section of the aerogel composite, the heat transmission coefficient after the compression may be 1.8 times or less, 1.7 times or less, 1.6 times or less, 1.5 times or less, 1.4 times or less, 1.3 times or less, 1.2 times or less, 1.1 times or less, 1.05 times or less, 1.04 times or less, 1.03 times or less, 1.02 times or less, or 1.01 times or less the heat transmission coefficient before the compression.

When the aerogel composite is applied with a pressure of any one pressure value of 3 bar to 9 bar in the horizontal direction (transverse direction) with respect to the cross-section of the aerogel composite, the heat transmission coefficient after the compression may be 1.7 times or less, 1.6 times or less, 1.5 times or less, 1.45 times or less, 1.4 times or less, 1.3 times or less, 1.2 times or less, 1.1 times or less, 1.05 times or less, 1.04 times or less, 1.03 times or less, 1.02 times or less, or 1.01 times or less the heat transmission coefficient before the compression.

When the aerogel composite is applied with a pressure of any one pressure value of 9 bar to 33 bar in the horizontal direction (transverse direction) with respect to the cross-section of the aerogel composite, the heat transmission coefficient after the compression may be 1.8 times or less, 1.7 times or less, 1.6 times or less, 1.5 times or less, 1.4 times or less, 1.3 times or less, 1.2 times or less, 1.1 times or less, 1.05 times or less, 1.04 times or less, 1.03 times or less, 1.02 times or less, or 1.01 times or less the heat transmission coefficient before the compression.

When the aerogel composite is applied with a pressure of any one pressure value of 15 bar to 33 bar in the horizontal direction (transverse direction) with respect to the cross-section of the aerogel composite, the heat transmission coefficient after the compression may be 2.3 times or less, 2.2 times or less, 2.1 times or less, 2 times or less, 1.9 times or less, 1.8 times or less, 1.7 times or less, 1.6 times or less, 1.5 times or less, 1.4 times or less, 1.3 times or less, 1.2 times or less, 1.1 times or less, or 1.05 times or less the heat transmission coefficient before the compression.

When the aerogel composite is applied with a pressure of any one pressure value of 15 bar to 30 bar in the horizontal direction (transverse direction) with respect to the cross-section of the aerogel composite, the heat transmission coefficient after the compression may be 2.3 times or less, 2.2 times or less, 2.1 times or less, 2 times or less, 1.9 times or less, 1.8 times or less, 1.7 times or less, 1.6 times or less, 1.5 times or less, 1.4 times or less, 1.3 times or less, 1.2 times or less, 1.1 times or less, or 1.05 times or less the heat transmission coefficient before the compression.

When the aerogel composite is applied with a pressure of any one pressure value of 24 bar to 33 bar in the horizontal direction (transverse direction) with respect to the cross-section of the aerogel composite, the heat transmission coefficient after the compression may be 2.7 times or less, 2.6 times or less, 2.5 times or less, 2.4 times or less, 2.3 times or less, 2.2 times or less, 2.1 times or less, 2 times or less, 1.9 times or less, 1.8 times or less, 1.7 times or less, 1.6 times or less, 1.5 times or less, 1.4 times or less, 1.3 times or less, 1.2 times or less, or 1.1 times or less the heat transmission coefficient before the compression.

When the aerogel composite is applied with a pressure of any one pressure value of 24 bar to 30 bar in the horizontal direction (transverse direction) with respect to the cross-section of the aerogel composite, the heat transmission coefficient after the compression may be 2.7 times or less, 2.6 times or less, 2.5 times or less, 2.4 times or less, 2.3 times or less, 2.2 times or less, 2.1 times or less, 2 times or less, 1.9 times or less, 1.8 times or less, 1.7 times or less, 1.6 times or less, 1.5 times or less, 1.4 times or less, 1.3 times or less, 1.2 times or less, or 1.1 times or less the heat transmission coefficient before the compression.

When the aerogel composite is applied with a pressure of any one pressure value of 30 bar to 33 bar in the horizontal direction (transverse direction) with respect to the cross-section of the aerogel composite, the heat transmission coefficient after the compression may be 3 times or less, 2.9 times or less, 2.8 times or less, 2.7 times or less, 2.6 times or less, 2.5 times or less, 2.4 times or less, 2.3 times or less, 2.2 times or less, 2.1 times or less, 2 times or less, 1.9 times or less, 1.8 times or less, 1.7 times or less, 1.6 times or less, 1.5 times or less, 1.4 times or less, 1.3 times or less, 1.2 times or less, or 1.1 times or less the heat transmission coefficient before the compression.

When the aerogel composite is applied with a pressure of 3 bar in the horizontal direction (transverse direction) with respect to the cross-section of the aerogel composite, the heat transmission coefficient after the compression may be 1.45 times or less, 1.4 times or less, 1.3 times or less, 1.2 times or less, 1.1 times or less, 1.05 times or less, 1.04 times or less, 1.03 times or less, 1.02 times or less, or 1.01 times or less, preferably 1.2 times or less, 1.1 times or less, 1.05 times or less, 1.04 times or less, 1.03 times or less, 1.02 times or less, or 1.01 times or less the heat transmission coefficient before the compression.

When the aerogel composite is applied with a pressure of 3 bar in the horizontal direction (transverse direction) with respect to the cross-section of the aerogel composite, the heat transmission coefficient after the compression may be not more than 1.45 times the heat transmission coefficient before the compression. When the aerogel composite is applied with a pressure of 3 bar in the horizontal direction (transverse direction) with respect to the cross-section of the aerogel composite, the heat transmission coefficient after the compression may be equal to, or not more than 1.45 times the heat transmission coefficient before the compression. When the aerogel composite is applied with a pressure of 3 bar in the horizontal direction (transverse direction) with respect to the cross-section of the aerogel composite, the heat transmission coefficient after the compression may be greater than, and not more than 1.45 times the heat transmission coefficient

10

before the compression.

When the aerogel composite is applied with a pressure of 9 bar in the horizontal direction (transverse direction) with respect to the cross-section of the aerogel composite, the heat transmission coefficient after the compression may be 1.85 times or less, 1.8 times or less, 1.7 times or less, 1.6 times or less, 1.5 times or less, 1.4 times or less, 1.3 times or less, 1.2 times or less, 1.1 times or less, 1.05 times or less, 1.04 times or less, 1.03 times or less, 1.02 times or less, or 1.01 times or less, preferably 1.6 times or less, 1.5 times or less, 1.4 times or less, 1.3 times or less, 1.2 times or less, 1.1 times or less, 1.05 times or less, 1.04 times or less, 1.03 times or less, 1.02 times or less, or 1.01 times or less the heat transmission coefficient before the compression.

When the aerogel composite is applied with a pressure of 9 bar in the horizontal direction (transverse direction) with respect to the cross-section of the aerogel composite, the heat transmission coefficient after the compression may be not more than 1.85 times the heat transmission coefficient before the compression. When the aerogel composite is applied with a pressure of 9 bar in the horizontal direction (transverse direction) with respect to the cross-section of the aerogel composite, the heat transmission coefficient after the compression may be equal to, or not more than 1.85 times the heat transmission coefficient before the compression. When the aerogel composite is applied with a pressure of 9 bar in the horizontal direction (transverse direction) with respect to the cross-section of the aerogel composite, the heat transmission coefficient after the compression may be greater than, and not more than 1.85 times the heat transmission coefficient before the compression.

When the aerogel composite is applied with a pressure of 15 bar in the horizontal direction (transverse direction) with respect to the cross-section of the aerogel composite, the heat transmission coefficient after the compression may be 2.35 times or less, 2.3 times or less, 2.2 times or less, 2.1 times or less, 2 times or less, 1.9 times or less, 1.8 times or less, 1.7 times or less, 1.6 times or less, 1.5 times or less, 1.4 times or less, 1.3 times or less, 1.2 times or less, 1.1 times or less, 1.05 times or less, 1.04 times or less, 1.03 times or less, 1.02 times or less, or 1.01 times or less, preferably 2 times or less, 1.9 times or less, 1.8 times or less, 1.7 times or less, 1.6 times or less, 1.5 times or less, 1.4 times or less, 1.3 times or less, 1.2 times or less, 1.1 times or less, or 1.05 times or less, and more preferably 1.7 times or less, 1.6 times or less, 1.5 times or less, 1.4 times or less, 1.3 times or less, 1.2 times or less, or 1.1 times or less the heat transmission coefficient before the compression.

When the aerogel composite is applied with a pressure of 15 bar in the horizontal direction (transverse direction) with respect to the cross-section of the aerogel composite, the heat transmission coefficient after the compression along the transverse direction may be not more than 2.35 times the heat transmission coefficient before the compression. When the aerogel composite is applied with a pressure of 15 bar in the horizontal direction (transverse direction) with respect to the cross-section of the aerogel composite, the heat transmission coefficient after the compression may be equal to, or not more than 2.35 times the heat transmission coefficient before the compression. When the aerogel composite is applied with a pressure of 15 bar in the horizontal direction (transverse direction) with respect to the cross-section of the aerogel composite, the heat transmission coefficient after the compression may be greater than, and not more than 2.35 times the heat transmission coefficient before the compression.

When the aerogel composite is applied with a pressure of 24 bar in the horizontal direction (transverse direction) with respect to the cross-section of the aerogel composite, the heat transmission coefficient after the compression may be 2.7 times or less, 2.6 times or less, 2.5 times or less, 2.4 times or less, 2.3 times or less, 2.2 times or less, 2.1 times or less, 2 times or less, 1.9 times or less, 1.8 times or less, 1.7 times or less, 1.6 times or less, 1.5 times or less, 1.4 times or less, 1.3 times or less, 1.2 times or less, 1.1 times or less, 1.05 times or less, 1.04 times or less, 1.03 times or less, 1.02 times or less, or 1.01 times or less, preferably 2.3 times or less, 2.2 times or less, 2.1 times or less, 2 times or less, 1.9 times or less, 1.8 times or less, 1.7 times or less 1.6 times or less, 1.5 times or less, 1.4 times or less, 1.3 times or less, 1.2 times or less, 1.1 times or less, or 1.05 times or less, and more preferably 1.7 times or less, 1.6 times or less, 1.5 times or less, 1.4 times or less, 1.3 times or less, 1.2 times or less, or 1.1 times or less the heat transmission coefficient before the compression.

When the aerogel composite is applied with a pressure of 24 bar in the horizontal direction (transverse direction) with respect to the cross-section of the aerogel composite, the heat transmission coefficient after the compression along the transverse direction may be not more than 2.7 times the heat transmission coefficient before the compression. When the aerogel composite is applied with a pressure of 24 bar in the horizontal direction (transverse direction) with respect to the cross-section of the aerogel composite, the heat transmission coefficient after the compression may be equal to, or not more than 2.7 times the heat transmission coefficient before the compression. When the aerogel composite is applied with a pressure of 24 bar in the horizontal direction (transverse direction) with respect to the cross-section of the aerogel composite, the heat transmission coefficient after the compression may be greater than, and not more than 2.7 times the heat transmission coefficient before the compression.

When the aerogel composite is applied with a pressure of 30 bar in the horizontal direction (transverse direction) with respect to the cross-section of the aerogel composite, the heat transmission coefficient after the compression may be 3 times or less, 2.9 times or less, 2.8 times or less, 2.7 times or less, 2.6 times or less, 2.5 times or less, 2.4 times or less, 2.3 times or less, 2.2 times or less, 2.1 times or less, 2 times or less, 1.9 times or less, 1.8 times or less, 1.7 times or less, 1.6 times or less, 1.5 times or less, 1.4 times or less, 1.3 times or less, 1.2 times or less, 1.1 times or less, 1.05 times or less, 1.04 times or less, 1.03 times or less, 1.02 times or less, or 1.01 times or less, preferably 2.3 times or less, 2.2 times or less, 2.1 times or less, 2 times or less, 1.9 times or less, 1.8 times or less, 1.7 times or less 1.6 times or less, 1.5 times or less, 1.4 times or less, 1.3 times or less, 1.2 times or less, 1.1 times or less, or 1.05 times or less, and more preferably 1.7 times or less, 1.6 times or less, 1.5 times or less, 1.4 times or less, 1.3 times or less, 1.2 times or less, or 1.1 times or less the heat transmission coefficient before the compression.

When the aerogel composite is applied with a pressure of 30 bar in the horizontal direction (transverse direction) with respect to the cross-section of the aerogel composite, the heat transmission coefficient after the compression in the transverse direction may be not more than 3 times the heat transmission coefficient before the compression. When the aerogel composite is applied with a pressure of 30 bar in the horizontal direction (transverse direction) with respect to the cross-section of the aerogel composite, the heat transmission coefficient after the compression may be equal to, or not more than 3 times the heat transmission coefficient before the compression. When the aerogel composite is applied with a pressure of 30 bar in the horizontal direction (transverse direction) with respect to the cross-section of the aerogel composite, the heat transmission coefficient after the compression may be greater than, and not more than 3 times the heat transmission coefficient before the compression.

When the aerogel composite is applied with a pressure of 33 bar in the horizontal direction (transverse direction) with respect to the cross-section of the aerogel composite, the heat transmission coefficient after the compression may be 3 times or less, 2.9 times or less, 2.8 times or less, 2.7 times or less, 2.6 times or less, 2.5 times or less, 2.4 times or less, 2.3 times or less, 2.2 times or less, 2.1 times or less, 2 times or less, 1.9 times or less, 1.8 times or less, 1.7 times or less, 1.6 times or less, 1.5 times or less, 1.4 times or less, 1.3 times or less, 1.2 times or less, 1.1 times or less, 1.05 times or less, 1.04 times or less, 1.03 times or less, 1.02 times or less, or 1.01 times or less, preferably 2.3 times or less, 2.2 times or less, 2.1 times or less, 2 times or less, 1.9 times or less, 1.8 times or less, 1.7 times or less 1.6 times or less, 1.5 times or less, 1.4 times or less, 1.3 times or less, 1.2 times or less, or 1.1 times or less, and more preferably 2.0 times or less, 1.9 times or less, 1.8 times or less, 1.7 times or less, 1.6 times or less, 1.5 times or less, 1.4 times or less, 1.3 times or less, or 1.2 times or less the heat transmission coefficient before the compression.

When the aerogel composite is applied with a pressure of 33 bar in the horizontal direction (transverse direction) with respect to the cross-section of the aerogel composite, the heat transmission coefficient after the compression along the transverse direction may be not more than 3 times the heat transmission coefficient before the compression. When the aerogel composite is applied with a pressure of 33 bar in the horizontal direction (transverse direction) with respect to the cross-section of the aerogel composite, the heat transmission coefficient after the compression may be equal to, or not more than 3 times the heat transmission coefficient before the compression. When the aerogel composite is applied with a pressure of 33 bar in the horizontal direction (transverse direction) with respect to the cross-section of the aerogel composite, the heat transmission coefficient after the compression may be greater than, and not more than 3 times the heat transmission coefficient before the compression.

When the aerogel composite is applied with a pressure of at least one of 3 bar, 9 bar, or 24 bar in a transverse direction with respect to the aerogel composite, the heat transmission coefficient after the compression is equal to, or not more than 1.8 times the heat transmission coefficient before the compression along the traverse direction.

When the aerogel composite is applied with respective pressures of 3 bar, 9 bar, and 24 bar in a transverse direction with respect to the aerogel composite, the heat transmission coefficient after the compression is equal to, or not more than 1.8 times the heat transmission coefficient before the compression along the traverse direction.

When the aerogel composite is applied with respective pressures of 3 bar, 9 bar, and 24 bar in a transverse direction with respect to the aerogel composite, the heat transmission coefficient after the compression is greater than 1 time, or not more than 1.8 times the heat transmission coefficient before the compression along the traverse direction.

When the aerogel composite is applied with a pressure of 3 bar in a transverse direction with respect to the aerogel composite, the heat transmission coefficient after the compression is greater than, or not more than 1.1 times the heat transmission coefficient before the compression, and when the aerogel composite is applied with a pressure of 9 bar, the heat transmission coefficient after the compression is 1.1 to 1.3 times the heat transmission coefficient before the compression, and when the aerogel composite is applied with a pressure of 24 bar, the heat transmission coefficient after the compression is 1.25 to 1.35 times the heat transmission coefficient before the compression, but is not limited thereto.

When a recovery rate or heat transmission coefficient after compression is measured using a press device or the like as described above, the measurement may be performed by preparing a single specimen from an aerogel composite; however, in the case where the size in width or length of an aerogel composite is smaller than a pressure applying portion of measurement equipment, measurement values of the compression recovery rate or heat transmission coefficient are presumed to be substantially the same as those obtained from a single specimen even if the compression recovery rate or heat transmission coefficient is measured after cutting the aerogel composite into two or more pieces and re-arranging the pieces so that both the width and length thereof are larger than the pressure applying equipment.

The recovery rate after compression or heat transmission coefficient after compression may be measured with respect to a rectangular aerogel composite specimen having a size of 20 cm x 20 cm in width and length. Here, if the size in width or length of the produced aerogel composite is less than 20 cm, two or more specimens may be re-arranged side by side so that the size of the specimens becomes 20 cm x 20 cm, and thereafter measurement may be performed with respect to the specimens.

Even when the aerogel composite is pressurized (or compressed) with a pressure of any intensity, the heat transmission coefficient is maintained within a specific range before and after the compression, so that the heat insulation performance may be maintained at an excellent level without significant degradation.

Specifically, the heat transmission coefficient obtained after compressing the aerogel composite with a pressure of at least one pressure value of 0 bar to 24 bar may satisfy Equation 3 below.

$$\{(\text{Heat transmission coefficient (a) before and after compression - Average value (b) of heat transmission coefficients before and after compression})\}= (\text{Average value (b) of heat transmission coefficients before and after compression}) \times A \qquad [\text{Equation 3}]$$

In Equation 3 above, the "heat transmission coefficient (a) before and after compression" means the heat transmission coefficient obtained after performing compression with a pressure of at least one pressure value in the range of 0 bar to 24 bar in the horizontal direction (transverse direction) with respect to the cross-section of the aerogel composite. The heat transmission coefficient (a) before and after compression may mean the heat transmission coefficient obtained after compressing the aerogel composite by applying a pressure of 0 bar, 3 bar, 9 bar, or 24 bar. Here, the pressure of 0 bar means that pressurization is not performed (no compression), and accordingly, the heat transmission coefficient obtained after performing compression by applying a pressure of 0 bar means the heat transmission coefficient of an unpressurized aerogel composite.

In addition, the "average value (b) of heat transmission coefficients before and after compression" means the average value of the heat transmission coefficient of an unpressurized (or uncompressed) aerogel composite, and the heat transmission coefficients obtained after performing compression with a pressure of at least two pressure values in the range of greater than 0 bar to not more than 24 bar in the horizontal direction (transverse direction) with respect to the cross-section of the aerogel composite. The "average value (b) of heat transmission coefficients before and after compression" may mean the average value of the heat transmission coefficients obtained after compressing the aerogel composite by applying a pressure of at least two pressure values among 0 bar, 3 bar, 9 bar, and 24 bar.

The A may be a rational number of from - 0.30 to + 0.30, a rational number of from - 0.25 to + 0.25, a rational number of from - 0.24 to + 0.24, a rational number of from - 0.23 to + 0.23, a rational number of from - 0.22 to + 0.22, a rational number of from - 0.21 to + 0.21, a rational number of from - 0.20 to + 0.20, a rational number of from - 0.19 to + 0.19, a rational number of from - 0.15 to + 0.15, a rational number of from - 0.14 to + 0.14, a rational number of from - 0.13 to + 0.13, a rational number of from - 0.12 to + 0.12, a rational number of from - 0.11 to + 0.11, or a rational number of from - 0.10 to + 0.10.

The heat transmission coefficient of an unpressurized, uncompressed (0 bar compression) aerogel composite may satisfy Equation 3 above. At this time, the average value (b) of heat transmission coefficients before and after compression may mean the average value of the heat transmission coefficient of the uncompressed aerogel composite, and the heat transmission coefficients obtained after performing compression with a pressure of at least two pressure values among 3 bar, 9 bar, and 24 bar in the horizontal direction (transverse direction) with respect to the cross-section of the aerogel composite.

The heat transmission coefficient obtained after compressing the aerogel composite with a pressure of 3 bar, 9 bar, or 24 bar may satisfy Equation 3 above. At this time, the average value (b) of heat transmission coefficients before and after compression may mean the average value of the heat transmission coefficient of an uncompressed aerogel composite, and the heat transmission coefficients obtained after performing compression with a pressure of at least two pressure values among 3 bar, 9 bar, and 24 bar in the horizontal direction (transverse direction) with respect to the cross-section of the aerogel composite.

The average value (b) of the heat transmission coefficients before and after compression means the average value of the heat transmission coefficient of an uncompressed (0 bar compression) aerogel composite, and the heat transmission coefficients obtained after performing compression by applying pressures of 3 bar, 9 bar, and 24 bar, respectively, in the horizontal direction (transverse direction) with respect to the cross-section of the aerogel composite, and at this time, the A may be a rational number of from - 0.30 to + 0.30, a rational number of from - 0.25 to + 0.25, a rational number of from - 0.24 to + 0.24, a rational number of from - 0.23 to + 0.23, or a rational number of from - 0.22 to + 0.22.

The average value (b) of the heat transmission coefficients before and after compression means the average value of the heat transmission coefficient of an uncompressed (0 bar compression) aerogel composite, and the heat transmission coefficients obtained after performing compression by applying pressures of 3 bar and 9 bar, respectively, in the horizontal direction (transverse direction) with respect to the cross-section of the aerogel composite, and at this time, the A may be a rational number of from - 0.25 to + 0.25, a rational number of from - 0.24 to + 0.24, a rational number of from - 0.23 to + 0.23, a rational number of from - 0.22 to + 0.22, a rational number of from - 0.21 to + 0.21, or a rational number of from - 0.20 to + 0.20.

The heat transmission coefficient obtained after compressing the aerogel composite with a pressure of 0 bar, 3 bar, 9 bar, or 24 bar may satisfy Equation 3 above. At this time, the average value (b) of heat transmission coefficients before and after compression may mean the average value of the heat transmission coefficient of an uncompressed aerogel composite, and the heat transmission coefficients obtained after performing compression with a pressure of at least two pressure values among 3 bar, 9 bar, and 24 bar in the horizontal direction (transverse direction) with respect to the cross-section of the aerogel composite. The A may be a rational number of from - 0.25 to + 0.25.

The heat transmission coefficient obtained after compressing the aerogel composite with respective pressure values of 0 bar, 3 bar, 9 bar, and 24 bar may satisfy Equation 3. At this time, the average value (b) of the heat transmission coefficients before and after compression may mean the average value of the heat transmission coefficient of an uncompressed (0 bar) aerogel composite, and the heat transmission coefficients obtained after compressing the aerogel composite with respective pressure values of 3 bar, 9 bar, and 24 bar in the horizontal direction (transverse direction) with respect to the cross-section of the aerogel composite. The absolute value of A may be a rational number of from 0.06 to 0.15.

The heat transmission coefficient obtained after compressing the aerogel composite with pressures of 0 bar(uncompressed) and 24 bar may also satisfy Equation 3. At this time, the average value (b) of the heat transmission coefficients before and after compression may mean the average value of the heat transmission coefficient of an uncompressed (0 bar) aerogel composite, and the heat transmission coefficients obtained after compressing the aerogel composite with respective pressure values of 3 bar, 9 bar, and 24 bar in the horizontal direction (transverse direction) with respect to the cross-section of the aerogel composite. The absolute value of A may be a rational number of from 0.10 to 0.15.

In addition, even when the aerogel composite is pressurized (or compressed) with a pressure of any intensity, the heat transmission coefficient is maintained within a specific range after the compression, so that the heat insulation performance may be maintained at an excellent level without significant degradation.

Specifically, the heat transmission coefficient obtained after compressing the aerogel composite with a pressure of at least one pressure value of 3 bar to 30 bar may satisfy Equation 4 below.

(Heat transmission coefficient (c) after compression - Average value (d) of heat transmission coefficients after compression) = (Average value (d) of heat transmission coefficients after compression) X B          [Equation 4]

In Equation 4 above, the "heat transmission coefficient (c) after compression" means the heat transmission coefficient obtained after performing compression with a pressure of at least one pressure value in the range of 3 bar to 30 bar in the horizontal direction (transverse direction) with respect to the cross-section of the aerogel composite. The heat transmission coefficient (c) after compression may mean the heat transmission coefficient obtained after performing compression by applying a pressure of 3 bar, 9 bar, 15 bar, 24 bar, or 30 bar, as another example, may mean the heat transmission coefficient obtained after performing compression by applying a pressure of 3 bar, 9 bar, or 24 bar, and as yet another example, may mean the heat transmission coefficient obtained after performing compression by applying a pressure of 9 bar, 15 bar, 24 bar, or 30 bar.

In addition, the "average value (d) of heat transmission coefficients after compression" means the average value of heat transmission coefficients obtained after performing compression with a pressure of at least two pressure values in the range of 3 bar to 30 bar in the horizontal direction (transverse direction) with respect to the cross-section of the aerogel composite. The average value (d) of heat transmission coefficients after compression may mean the average value of heat transmission coefficients obtained after performing compression by applying pressures of 3 bar, 9 bar, and 24 bar, respectively, may mean the average value of heat transmission coefficients obtained after performing compression by applying pressures of 9 bar, 15 bar, 24 bar, and 30 bar, respectively, as another example.

The B may be a rational number of from - 0.25 to + 0.25, a rational number of from - 0.24 to + 0.24, a rational number of from - 0.23 to + 0.23, a rational number of from - 0.22 to + 0.22, a rational number of from - 0.21 to + 0.21, a rational number of from - 0.20 to + 0.20, a rational number of from - 0.19 to + 0.19, a rational number of from - 0.15 to + 0.15, a rational number of from - 0.14 to + 0.14, a rational number of from - 0.13 to + 0.13, a rational number of from - 0.12 to + 0.12, a rational number of from - 0.11 to + 0.11, or a rational number of from - 0.10 to + 0.10.

The heat transmission coefficient obtained after compressing the aerogel composite with a pressure of 9 bar, 15 bar, 24 bar, or 30 bar may satisfy Equation 4 above. At this time, in Equation 4 above, the heat transmission coefficient (c) after compression may mean the heat transmission coefficient obtained after performing compression with a pressure of a pressure value of 9 bar, 15 bar, 24 bar, or 30 bar in the horizontal direction (transverse direction) with respect to the cross-section of the aerogel composite, and the average value (d) of heat transmission coefficients after compression may mean the average value of heat transmission coefficients obtained after performing compression with a pressure of at least two pressure values among 9 bar, 15 bar, 24 bar, and 30 bar in the horizontal direction (transverse direction) with respect to the cross-section of the aerogel composite.

The heat transmission coefficient obtained after compressing the aerogel composite with respective pressures of 9 bar, 15 bar, 24 bar, and 30 bar may satisfy Equation 4 above. At this time, in Equation 4 above, the heat transmission coefficient (c) after compression may mean the heat transmission coefficient obtained after performing compression with a pressure of any one pressure value of 9 bar, 15 bar, 24 bar, and 30 bar in the horizontal direction (transverse direction) with respect to the cross-section of the aerogel composite, the average value (d) of heat transmission coefficients after compression may mean the average value of heat transmission coefficients obtained after performing compression with a pressure of respective pressure values of 9 bar, 15 bar, 24 bar, and 30 bar in the horizontal direction (transverse direction) with respect to the cross-section of the aerogel composite, and the B may be a rational number of from - 0.15 to + 0.15, a rational number of from - 0.14 to + 0.14, a rational number of from - 0.13 to + 0.13, a rational number of from - 0.12 to + 0.12, a rational number of from - 0.11 to + 0.11, or a rational number of from - 0.10 to + 0.10.

The heat transmission coefficient obtained after compressing the aerogel composite with a pressure of 3 bar, 9 bar, or 24 bar may satisfy Equation 4 above. At this time, in Equation 4 above, the heat transmission coefficient (c) after compression may mean the heat transmission coefficient obtained after performing compression with a pressure of a pressure value of 3 bar, 9 bar, or 24 bar in the horizontal direction (transverse direction) with respect to the cross-section of the aerogel composite, and the average value (d) of heat transmission coefficients after compression may mean the average value of heat transmission coefficients obtained after performing compression with a pressure of at least two pressure values among 3 bar, 9 bar, and 24 bar in the horizontal direction (transverse direction) with respect to the cross-section of the aerogel composite.

The heat transmission coefficient obtained after compressing the aerogel composite with a pressure of 3 bar, 9 bar, and 24 bar may satisfy Equation 4 above. At this time, in Equation 4 above, the heat transmission coefficient (c) after compression may mean the heat transmission coefficient obtained after performing compression with a pressure of any one pressure value of 3 bar, 9 bar, or 24 bar in the horizontal direction (transverse direction) with respect to the cross-section of the aerogel composite, the average value (d) of heat transmission coefficients after compression may mean the average value of heat transmission coefficients obtained after performing compression with a pressure of respective pressure values of 3 bar, 9 bar, and 24 bar in the horizontal direction (transverse direction) with respect to the cross-section of the aerogel composite, and the B may be a rational number of from - 0.25 to + 0.25, a rational number of from - 0.24 to + 0.24, a rational number of from - 0.23 to + 0.23, a rational number of from - 0.22 to + 0.22, a rational number of from - 0.21 to + 0.2, a rational number of from - 0.20 to + 0.20, or a rational number of from - 0.19 to + 0.19.

In addition, a change rate (C) of heat transmission coefficient after performing compression per unit application pressure represented by Equation 5 below on the aerogel composite may be a rational number of - 0.10 or greater, - 0.09 or greater, - 0.08 or greater, - 0.07 or greater, - 0.06 or greater, - 0.05 or greater, - 0.04 or greater, - 0.03 or greater, - 0.02 or greater, or - 0.01 or greater, and may be a rational number of + 0.100 or less, + 0.09 or less, + 0.08 or less, + 0.07 or less, + 0.06 or less, + 0.05 or less, + 0.04 or less, + 0.03 or less, + 0.02 or less, or + 0.01 or less. Preferably, the change rate (C) may be a rational number of from - 0.10 to + 0.10, a rational number of from - 0.09 to + 0.09, a rational number of from - 0.08 to + 0.08, a rational number of from - 0.07 to + 0.07, a rational number of from - 0.06 to + 0.06, or a rational number of from - 0.05 to + 0.05.

$$C = \text{(Heat transmission coefficient after performing compression with pressure of x - Heat transmission coefficient after performing compression with pressure of y)}/(x - y) \qquad \text{[Equation 5]}$$

In Equation 5 above, x and y are each independently any one pressure value (unit bar) in the pressure range of 3 bar to 24 bar, and are different pressure values from each other.

In Equation 5 above, x and y may each independently be any one pressure value of 3 bar, 9 bar, 15 bar, and 24 bar.

In Equation 5 above, x may be 24 bar, and y may be 3 bar.

In Equation 5 above, x may be 24 bar, and y may be 9 bar.

In Equation 5 above, x may be 15 bar, and y may be 9 bar.

In Equation 5 above, x may be 24 bar, and y may be 15 bar.

The change rate (C) may be a rational number of from - 0.10 to + 0.10.

In addition, the aerogel composite may satisfy Equation 6 below.

$$\text{Heat transmission coefficient (e) after compression} = \text{(Average value (f) of heat transmission coefficients after compression)} \times D \qquad \text{[Equation 6]}$$

In Equation 6 above, the "heat transmission coefficient (e) after compression" may mean the heat transmission coefficient obtained after performing compression by applying a pressure of 3 bar, 9 bar, 15 bar, 24 bar, or 30 bar in the horizontal direction (transverse direction) with respect to the cross-section of the aerogel composite.

The "average value (f) of heat transmission coefficients after compression" may mean the average value of heat transmission coefficients obtained after performing compression with a pressure of at least two pressure values among 3 bar, 9 bar, 15 bar, 24 bar, and 30 bar in the horizontal direction (transverse direction) with respect to the cross-section of the aerogel composite.

The D may be a rational number of from 0.70 to 1.20, a rational number of from 0.75 to 1.20, a rational number of from 0.80 to 1.20, a rational number of from 0.85 to 1.20, a rational number of from 0.75 to 1.18, a rational number of from 0.80 to 1.18, a rational number of from 0.85 to 1.18, a rational number of from 0.75 to 1.16, a rational number of from 0.80 to 1.16, a rational number of from 0.85 to 1.16, a rational number of from 0.80 to 1.14, a rational number of from 0.85 to 1.14, a rational number of from 0.80 to 1.12, a rational number of from 0.85 to 1.12, a rational number of from 0.85 to 1.10, a rational number of from 0.90 to 1.12, a rational number of from 0.80 to 1.10, or a rational number of from 0.85 to 1.10.

In Equation 6 above, the heat transmission coefficient (e) after compression is the heat transmission coefficient obtained after performing compression with a pressure of 9 bar in the horizontal direction (transverse direction) with respect to the cross-section of the aerogel composite, and the average value (f) of heat transmission coefficients after compression is the average value of heat transmission coefficients obtained after performing compression by applying pressures of 9 bar, 15 bar, 24 bar, and 30 bar, respectively, and at this time the D may be a rational number of from 0.85 to 1.12, a rational number of from 0.90 to 1.12, a rational number of from 0.85 to 1.10, a rational number of from 0.90 to 1.10, a rational number of from 0.85 to 1.0, or a rational number of from 0.90 to 1.0.

In Equation 6 above, the heat transmission coefficient (e) after compression is the heat transmission coefficient obtained after performing compression with a pressure of 30 bar in the horizontal direction (transverse direction) with respect to the cross-section of the aerogel composite, the average value (f) of heat transmission coefficients after compression is the average value of heat transmission coefficients obtained after performing compression by applying pressures of 9 bar, 15 bar, 24 bar, and 30 bar, respectively, and at this time the D may be a rational number of from 0.90 to 1.12, a rational number of from 0.95 to 1.12, a rational number of from 0.90 to 1.10, a rational number of from 0.95 to 1.10, a rational number of from 1.0 to 1.12, or a rational number of from 1.0 to 1.10.

In Equation 6 above, the heat transmission coefficient (e) after compression is the heat transmission coefficient obtained after performing compression with a pressure of 3 bar in the horizontal direction (transverse direction) with respect to the cross-section of the aerogel composite, the average value (f) of heat transmission coefficients after compression is the average value of heat transmission coefficients obtained after performing compression by applying pressures of 3 bar, 9 bar, and 24 bar, respectively, and at this time the D may be a rational number of from 0.75 to 1.20, a rational number of from 0.75 to 1.18, a rational number of from 0.75 to 1.16, a rational number of from 0.75 to 1.14, a rational number of from 0.80 to 1.14, a rational number of from 0.75 to 1.20, a rational number of from 0.80 to 1.12, a rational number of from 0.75 to 1.10, a rational number of from 0.80 to 1.10, a rational number of from 0.75 to 1.05, or a rational number of from 0.80 to 1.05.

In Equation 6 above, the heat transmission coefficient (e) after compression is the heat transmission coefficient obtained after performing compression with a pressure of 24 bar in the horizontal direction (transverse direction) with respect to the cross-section of the aerogel composite, the average value (f) of heat transmission coefficients after compression is the average value of heat transmission coefficients obtained after performing compression by applying pressures of 3 bar, 9 bar, and 24 bar, respectively, and at this time the D may be a rational number of from 0.80 to 1.20, a rational number of from 0.85 to 1.20, a rational number of from 0.85 to 1.18, a rational number of from 0.90 to 1.18, a rational number of from 0.85 to 1.16, a rational number of from 0.90 to 1.16, a rational number of from 0.95 to 1.16, or a rational number of from 1.0 to 1.16.

The aerogel composite has a compressive strength of 20 kPa to 80 kPa, 20 kPa to 70 kPa, 30 kPa to 80 kPa, 30 kPa to 70 kPa, 35 kPa to 80 kPa, or 35 kPa to 70 kPa at 10% deformation, and may have excellent mechanical strength. Here, the compressive strength may be measured by preparing a specimen according to the ASTM C165 standard.

The aerogel composite has a tensile strength of 30 N/cm$^2$ to 60 N/cm$^2$, 40 N/cm$^2$ to 55 N/cm$^2$, or 45 N/cm$^2$ to 55 N/cm$^2$, and may have excellent flexibility. Here, the tensile strength may be measured by preparing a specimen according to the ASTM D638 standard.

In the present invention, the aerogel composite may be generally formed by preparing a silica sol, impregnating a fiber substrate with the silica sol, and then performing gelation thereon, and drying the same. Hereinafter, each step will be described. However, the specific preparation processes or examples thereof described herein are not intended to be limited to any particular type of aerogel or preparation method thereof. The present invention may include any aerogel formed by any associated preparation method known to those skilled in the art.

Preparation of silica sol

In the present invention, a silica precursor composition and a catalyst composition may be mixed to prepare a silica sol.

The silica precursor composition may include water and/or a polar organic solvent in a silica precursor.

The silica precursor may be used without limitation as long as it is a precursor which may be used to form a silica aerogel, and for example, may be a silicon-containing alkoxide-based compound. Specifically, the silica precursor may be tetra alkyl silicate such as tetramethyl orthosilicate (TMOS), tetraethyl orthosilicate (TEOS), methyl triethyl orthosilicate, dimethyl diethyl orthosilicate, tetrapropyl orthosilicate, tetraisopropyl orthosilicate, tetrabutyl orthosilicate, tetra secondary butyl orthosilicate, tetra tertiary butyl orthosilicate, tetrahexyl orthosilicate, tetracyclohexyl orthosilicate, and tetradodecyl orthosilicate. Among these, more specifically, the silica precursor may be tetramethyl orthosilicate (TMOS), tetraethyl orthosilicate (TEOS), or a mixture thereof.

In addition, the silica precursor may be a water glass solution. Here, the water glass solution may be a diluted solution in which distilled water is added to water glass and then mixed therewith, and the water glass may be sodium silicate ($Na_2SiO_3$) which is an alkali silicate salt obtained by melting silicon dioxide ($SiO_2$) and alkali.

In addition, the silica precursor may include a pre-hydrolyzed TEOS (HTEOS). The HTEOS is an ethyl silicate oligomer material having a wide molecular weight distribution, and when synthesized into an oligomer form from a TEOS monomer, physical properties such as gelation time may be adjusted, and thus, may be easily applied according to a user's reaction conditions. In addition, there is an advantage in that reproducible physical properties of a final product may be created. The HTEOS may typically be synthesized by a condensation reaction of TEOS which has undergone a partial hydration step under acidic conditions. That is, the HTEOS is in the form of an oligomer prepared by condensing TEOS, wherein the oligomer is partially hydrated.

The silica precursor composition may further include silicate including a hydrophobic group. The type of the silicate including a hydrophobic group is not limited as long as it is an alkyl silane compound including an alkyl group inducing hydrophobization and a silane functional group capable of reacting with an -Si-O-functional group of a wet gel, but specific examples thereof may include one or more selected from the group consisting of methyltriethoxysilane (MTES), trimethylethoxysilane (TMES), trimethylsilanol (TMS), methyltrimethoxysilane (MTMS), dimethyldiethoxysilane (DMDEOS), ethyltriethoxysilane (ETES), and phenyltriethoxysilane (PTES), but are not limited thereto.

When the silicate including the hydrophobic group is included in the silica precursor composition, the silicate including the hydrophobic group and the tetraalkyl silicate may be included in a molar ratio (molar ratio of silicate including a hydrophobic group : tetraalkyl silicate) of 2 : 98 to 98 : 2. Within the above range, the strength and heat insulation performance of an aerogel may be secured with high efficiency, and contraction may be prevented during atmospheric pressure drying, thereby preventing degradation in heat insulation performance.

The silica concentration of the silica precursor composition may be 10 kg/m$^3$ to 100 kg/m$^3$, 20 kg/m$^3$ to 80 kg/m$^3$, 30 kg/m$^3$ to 70 kg/m$^3$, 30 kg/m$^3$ to 60 kg/m$^3$, or 35 kg/m$^3$ to 45 kg/m$^3$, but is not limited thereto. The silica concentration is the concentration of the silica included in the silica precursor with respect to the silica precursor composition, and may be suitably adjusted by varying the contents of a silica precursor, an organic solvent, and water.

The silica precursor may be used in an amount such that the content of the silica included in the silica sol becomes 0.1 wt% to 30 wt%, but is not limited thereto. When the content of the silica satisfies the above range, it is preferable in terms of securing mechanical physical properties, the flexibility in particular, of the aerogel composite at an excellent level while having the effect of improving heat insulation.

The polar organic solvent may include an alcohol, and specific examples thereof may include a monohydric alcohol such as methanol, ethanol, isopropanol, and butanol, a polyhydric alcohol such as glycerol, ethylene glycol, propylene glycol, diethylene glycol, dipropylene glycol, and sorbitol, or a combination thereof, but other solvents as known to those skilled in the art may also be used without limitation. When considering the miscibility with water and an aerogel, the polar organic solvent may be a monohydric alcohol having 1 to 6 carbon atoms such as methanol, ethanol, isopropanol, and butanol, and may be, for example, ethanol.

The polar organic solvent may be used in an appropriate amount by those skilled in the art in consideration of the degree of hydrophobicity in an aerogel composite to be finally produced while promoting a surface modification reaction.

In order to prepare a pre-hydrolyzed silica precursor when preparing the silica precursor composition, the silica precursor and the organic solvent may be mixed at a weight ratio of 1 : 0.1 to 1.5, 1 : 0.5 to 1.5, or 1 : 0.5 to 1.2, but are not limited thereto.

In addition, in order to prepare a pre-hydrolyzed silica precursor when preparing the silica precursor composition, the silica precursor and water may be mixed and prepared at a molar ratio of 1 : 0.1 to 10, 1 : 1 to 8, or 1 : 2 to 6, but are not limited thereto.

In addition, when a pre-hydrolyzed TEOS is included as a silica precursor when preparing the silica precursor composition, the pre-hydrolyzed TEOS and the organic solvent may be mixed at a weight ratio of 1 : 2 to 10, 1 : 3 to 8, or 1 : 3 to 6, but are not limited thereto.

The silica precursor composition may further include an acid catalyst, and specifically, may further include an acid catalyst when applying an alkoxy silane-based compound, which is not a hydrolysate, as a precursor. At this time, the acid catalyst may be used without limitation as long as it is an acid catalyst which allows the pH to be 3 or less, and in some embodiments, a hydrochloric acid, a nitric acid, a sulfuric acid, a phosphoric acid, an oxalic acid, or an acetic acid may be used. At this time, the acid catalyst may be added in an amount which allows the pH of the sol to be 3 or less, and may be added in the form of an aqueous solution in which the acid catalyst is dissolved in an aqueous solvent.

The catalyst composition may include, as a base catalyst, an inorganic base such as sodium hydroxide or potassium hydroxide, or an organic base such as ammonium hydroxide. Specific examples thereof may include sodium hydroxide (NaOH), potassium hydroxide (KOH), calcium hydroxide (Ca(OH)$_2$), ammonia (NH$_3$), ammonium hydroxide (NH$_4$OH; ammonia water), tetramethylammonium hydroxide (TMAH), tetraethylammonium hydroxide (TEAH), tetrapropylammonium hydroxide (TPAH), tetrabutylammonium hydroxide (TBAH), methylamine, ethylamine, isopropylamine, monoisopropylamine, diethylamine, diisopropylamine, dibutylamine, trimethylamine, triethylamine, triisopropylamine, tributylamine, choline, monoethanolamine, diethanolamine, 2-aminoethanol, 2-(ethyl amino) ethanol, 2-(methyl amino) ethanol, N-methyl diethanolamine, dimethylaminoethanol, diethylaminoethanol, nitrilotriethanol, 2-(2-aminoethoxy) ethanol, 1-amino-2-propanol, triethanolamine, monopropanolamine, dibutanolamine, pyridine, a combination thereof, or the like, but are not limited thereto.

The base catalyst may be included in an amount which allows the pH of the sol to be 5 to 9. If the pH of the sol is out of the above range, gelation may not be easily achieved or a gelation rate may be too low, so that processability may be degraded. In addition, since the base may be precipitated when introduced in a solid phase, it may be preferable that the base is added in a solution phase diluted by an aqueous solvent or the above-described organic solvent. At this time, the dilution ratio of the base catalyst and the organic solvent, specifically an alcohol, may be 1:4 to 1:100 based on a volume basis, but is not limited thereto.

Since the catalyst composition further includes an alkoxy silane-based compound having a hydrophobic group, the hydrophobic agent and the silica wet gel may react to strengthen the structure and perform surface modification.

The type of the alkoxy silane-based compound having a hydrophobic group is not limited as long as it is an alkyl silane compound including an alkyl group inducing hydrophobization and a silane functional group capable of reacting with an -Si-O-functional group of a wet gel, but specific examples thereof may include one or more selected from the group consisting of trimethylethoxysilane (TMES), trimethylsilanol (TMS), trimethylchlorosilane (TMCS), methyltrimethoxysilane (MTMS), methyltriethoxysilane (MTES), dimethyldiethoxysilane (DMDEOS), ethyltriethoxysilane, and phenyltriethoxysilane, but are not limited thereto.

The alkoxy silane-based compound having a hydrophobic group may be included in an amount of 3 parts by weight to 15 parts by weight, 5 parts by weight to 10 parts by weight, or 6 parts by weight to 8 parts by weight, based on 100 parts by weight of the silica sol, but is not limited thereto.

However, when the catalyst composition includes an alkoxy silane-based compound having a hydrophobic group, water may be included to promote a surface modification reaction. The catalyst composition may include 3 equivalents to 8 equivalents, 4 equivalents to 8 equivalents, or 5 equivalents to 6 equivalents of water based on 1 equivalent of a hydrophobizing agent.

In order to prepare the silica sol, the silica precursor composition and the catalyst composition may be mixed at a volume ratio of 1 : 0.01 to 10.0, 1 : 0.01 to 5.0, or 1 : 0.01 to 2.0, but is not limited thereto.

If necessary, an additive may be further added to the silica sol. At this time, all known additives which may be added when preparing an aerogel may be applied as the additive, and for example, an additive such as an opacifying agent and a flame retardant may be used.

The additive may be added in an amount of 0.1 wt% to 10 wt%, 0.1 wt% to 7 wt%, 0.5 wt% to 7 wt%, or 0.5 wt% to 5 wt% based on the silica content of the aerogel, but is not limited thereto.

Gelation of silica sol

In the present invention, after the silica sol is impregnated into the substrate, the silica sol may be subjected to gelation.

The impregnation process is a process of allowing a catalyzed silica sol to permeate into pores inside the substrate, and may be performed by introducing the catalyzed silica sol and the substrate into a reaction vessel, or may be performed by spraying the catalyzed silica sol on the substrate which is moving on a conveyor belt according to a roll-to-roll process. At this time, in order to improve the bonding between the substrate and the silica sol, the substrate may be lightly pressed down to be sufficiently impregnated. Thereafter, the substrate may be pressed to a predetermined thickness with a predetermined pressure to remove excess silica sol, so that drying time may be reduced.

The temperature of the silica sol in the reaction vessel may be 1 °C to 40 °C, 20 °C to 40 °C, 25 °C to 40 °C, 30 °C to 40 °C, or 35 °C to 45 °C. When the temperature of the silica sol in the reaction vessel satisfies the above range, it is preferable in that an appropriate viscosity range of the catalyzed sol may be more easily achieved, and even the retention time is relatively short, a desired level of viscosity range may be achieved.

The catalyzed silica sol may be impregnated into the substrate at a volume ratio of 0.1 to 10 : 1 (catalyzed silica sol: substrate), a volume ratio of 0.1 to 1 : 1, a volume ratio of 0.3 to 1 : 1, a volume ratio of 0.5 to 1 : 1, or a volume ratio of 0.7 to 1 : 1, but is not limited thereto.

In the present invention, the silica sol impregnated into the substrate may be subjected to gelation simultaneously with the impregnation process of the silica sol or sequentially after the impregnation process.

The substrate impregnated with the catalyzed sol may be subjected to gelation on a moving element such as a conveyor belt.

The "gelation" may refer to a sol-gel reaction, and the "sol-gelreaction" may be forming a network structure from a silicon unit precursor material. Here, the network structure may be a planar mesh structure in which specific polygons having one or more types of atomic arrangement are linked to each other, or a structure in which specific polyhedrons share their vertices, edges, faces, and the like with each other to form a three-dimensional skeletal structure.

The gelation may be performed under an atmosphere temperature of 20 °C to 40 °C, 20 °C to 30 °C, 25 °C to 40 °C, 30 °C to 40 °C, or 35 °C to 40 °C, and the gelation time may be 1 minute to 120 minutes, 1 minute to 100 minutes, 1 minute to 60 minutes, 5 minutes to 60 minutes, 5 minutes to 40 minutes, 10 minutes to 40 minutes, 10 minutes to 30 minutes, or 10 minutes to 20 minutes, but is not limited thereto.

Aging of wet gel composite, which has gelled

If necessary, an aging step may be further included, which is leaving the wet gel composite obtained by gelation as described above to stand at an appropriate temperature so as to achieve a complete chemical change. In the aging step, the network structure formed by the gelation may be more firmly formed, so that the mechanical stability of the aerogel composite may be improved.

The aging step may be performed by leaving the wet gel composite, which has gelled, to stand as it is at an appropriate temperature, or may be performed by adding a cross-linking-promoting compound.

In addition, the aging step may be performed by adding a solution in which a base catalyst such as sodium hydroxide (NaOH), potassium hydroxide (KOH), ammonium hydroxide ($NH_4OH$), triethylamine, pyridine, or the like is diluted to a concentration of 1 % to 10% in an organic solvent, in the presence of the wet gel composite. In this case, a Si-O-Si bonding in an aerogel is induced to the maximum to allow the network structure of a silica gel to be firmer, so that there is an effect of facilitating the maintenance of the pore structure in a drying process be performed later. At this time, the organic solvent may be the alcohol described above, and specifically, may include ethanol.

The aging step may be performed by leaving the wet gel composite, which has gelled, to stand at a temperature of 30 °C to 80 °C, 40 °C to 80 °C, or 50 °C to 80 °C for 0.1 hours to 20 hours, 0.5 hours to 15 hours, 0.5 hours to 10 hours, 0.5 hours to 7 hours, or 1 hour to 5 hours to strengthen the pore structure, and within this range, it is possible to prevent an increase in production costs by preventing a loss of the solvent due to evaporation while preventing a decrease in productivity.

In addition, the aging step may be performed by performing primary aging of leaving the wet gel composite, which has gelled, at 30 °C to 80 °C for 0.1 hours to 5 hours to strengthen the pore structure, and then performing secondary aging at 30 °C to 80 °C for 0.1 hours to 20 hours, 0.5 hours to 15 hours, 0.5 hours to 10 hours, 0.5 hours to 7 hours, or 1 hour to 5 hours, in the presence of a solution in which the base catalyst is diluted to a concentration of 1% to 10% in an organic solvent.

In addition, in the aging step (secondary aging if performed in two stages), a mixed solution of an alkoxy silane-based compound and an alcohol may be added to provide an additional sol precursor source as well as unreacted sol to induce additional gelation in the silica gel network structure, thereby further strengthening the gel structure. At this time, the alkoxy silane-based compound may be included in an amount of 0.5 parts by weight to 9.5 parts by weight, 1.0 part by weight to 9.5 parts by weight, or 1.5 parts by weight to 9.5 parts by weight based on the total 100 parts of the aging solution.

The alkoxy silane-based compound may include one or more selected from the group consisting of tetramethyl orthosilicate (TMOS), tetraethyl orthosilicate (TEOS), methyl triethyl orthosilicate, dimethyl diethyl orthosilicate, tetrapropyl orthosilicate, tetraisopropyl orthosilicate, tetrabutyl orthosilicate, tetra secondary butyl orthosilicate, tetra tertiary butyl orthosilicate, tetrahexyl orthosilicate, tetracyclohexyl orthosilicate, tetradodecyl orthosilicate, methyltrimethoxysilane (MTMS), methyltriethoxysilane (MTES), trimethylethoxysilane (TMES), trimethylsilanol (TMS), trimethylchlorosilane (TMCS), ethyltriethoxysilane (ETES), dimethyldiethoxysilane (DMDEOS), and phenyltriethoxysilane.

In addition, the alcohol may specifically be a monohydric alcohol such as methanol, ethanol, isopropanol, and butanol, or a polyhydric alcohol such as glycerol, ethylene glycol, propylene glycol, diethylene glycol, dipropylene glycol, and sorbitol, preferably a monohydric alcohol having 1 to 6 carbon atoms such as methanol, ethanol, isopropanol, and butanol, and may be, for example, ethanol, but is not limited thereto.

The aging step may be performed in a separate reaction vessel after recovering the wet gel composite which has gelled, or may be performed inside the reaction vessel in which the gelation step has been performed.

Surface modification of aged wet gel composite

If necessary, a surface modification step of hydrophobizing the surface of the wet gel composite obtained by the gelation as described above or the surface of the aged wet gel composite may be further included in the presence of a surface modifier.

As the surface modifier, a compound which hydrophobizes the surface of a wet gel may be applied without limitation, which may be, for example, a silane-based compound, a siloxane-based compound, a silanol-based compound, a silazane-based compound, or a combination thereof. Specific examples thereof may be a silane-based compound such as trimethylchlorosilane (TMCS), dimethyldimethoxysilane, dimethyldiethoxysilane, methyltrimethoxysilane (MTMS), methyltriethoxysilane (MTES), trimethylethoxysilane (TMES), vinyltrimethoxysilane, ethyltriethoxysilane, phenyltriethoxysilane, phenyltrimethoxysilane, tetraethoxysilane, dimethyldichlorosilane, and 3-aminopropyltriethoxysilane, a siloxane-based compound such as polydimethyl siloxane, polydiethyl siloxane, and octamethyl cyclotetra siloxane, a silanol-based compound such as trimethylsilanol, triethylsilanol, triphenyl silanol, and t-butyldimethylsilanol, a silazane-based compound such as 1,2-diethyldisilazane, 1,1,2,2-tetramethyldisilazane, 1,1,3,3-tetramethyldisilazane, 1,1,1,2,2,2-hexamethyldisilazane (HMDS), 1,1,2,2-tetraethyldisilazane, and 1,2-diisopropyldisilazane, or a combination thereof, but are not limited thereto.

The surface modifier may be used in a solution phase diluted in an organic solvent. Here, the organic solvent may be an alcohol (an organic solvent), and at this time, the surface modifier may be diluted to 1 vol% to 15 vol% based on the total volume of the diluted solution.

In addition, the surface modifier may be added in an amount of 0.01 vol% to 90 vol% with respect to the wet gel composite for a sufficient surface modification effect, but is not limited thereto.

The surface modification step may be performed at a temperature of 50 °C to 90 °C, or 50 °C to 80 °C for 1 hour to 24 hours, but is not limited thereto.

Drying step

A drying step of drying the surface-modified wet gel composite to obtain an aerogel composite may be included.

The drying is performed as a process of removing only the solvent while maintaining the pore structure of the aged gel, and may be performed, for example, by supercritical drying or atmospheric pressure drying.

The supercritical drying process is performed using supercritical carbon dioxide, and for example, may be performed by placing the aged wet gel composite in a supercritical drying reactor, filling the reactor with $CO_2$ in a liquid state, performing a solvent replacement process of replacing an alcohol solvent inside the wet gel with $CO_2$, followed by raising the temperature to a temperature of 40 °C to 70 °C at a predetermined temperature increase rate, for example, a rate of 0.1 °C/min to 1 °C/min, and then maintaining a pressure equal to or higher than the pressure at which carbon dioxide becomes supercritical, for example, a pressure of 100 bar to 150 bar, thereby maintaining the supercritical state of carbon dioxide for a predetermined period of time, specifically, 20 minutes to 1 hour. In general, carbon dioxide becomes supercritical at a temperature of 31 °C, and a pressure of 73.8 bar. After the predetermined temperature and the predetermined pressure at which carbon dioxide becomes supercritical are maintained for 2 hours to 12 hours, more specifically, 2 hours to 6 hours, the pressure is gradually removed to complete the supercritical drying process, thereby producing an aerogel composite, but the present invention is not limited thereto.

In addition, the atmospheric pressure drying process may be performed according to a typical method such as hot air drying or IR drying at a temperature of 70 °C to 200 °C and under an atmospheric pressure (1±0.3 atm), but is not limited thereto.

In addition to the above process, the present invention includes acidification of a basic metal oxide precursor (e.g., sodium silicate) in water to prepare a hydrogel. A salt by-product may be removed from a silicic acid precursor by ion exchange and/or subsequent washing of the formed gel with water. Removing the water from pores of the gel may be performed through exchange with a polar organic solvent, such as ethanol, methanol, or acetone. Subsequently, the liquid phase in the gel is at least partially extracted using innovative processing and extraction techniques.

In addition to the above process, the present invention includes reducing damage capillary force at a solvent/pore interface by chemical transformation of a matrix material in a wet gel state through conversion of a surface hydroxyl group to hydrophobic trimethylsilylether, thereby enabling liquid phase extraction from a gel material at a temperature and a pressure below the critical point of the solvent.

In addition to the above process, in the present invention, a liquid (solvent) in the gel material is frozen at a lower temperature and a sublimation process is subsequently performed, so that the solvent may be removed from the gel material. Such removal or drying of the solvent from the gel material is understood to be within the scope of the present invention. Such removal largely preserves the gel structure, resulting in producing an aerogel with unique properties.

The aerogel composite provided in the present invention may be usefully used as a heat insulation material, thermal insulation material, or non-combustible material for aircraft, ships, automobiles, electronic devices, and batteries, as well as for plant facilities for heat and cold insulation, such as piping or industrial furnaces of various industrial facilities.

In accordance with another exemplary embodiment of the present invention, a heat insulation member includes the aerogel composite.

The heat insulation member may include the aerogel composite as described above, and a support member positioned on at least one surface of an upper surface and a lower surface of the aerogel composite.

The support member may be, for example, a film-like support member, a sheet-like support member, a foil-like support member, a porous support member, and the like.

The film-like support member is formed by molding a polymer raw material into a thin film, and examples thereof may include an organic film of such as PET and polyimide, a glass film, and the like (including a metal-deposited film).

The sheet-like support member is formed by molding an organic, inorganic, or metallic fibrous raw material, and examples thereof may include paper, a non-woven fabric (including a glass mat), an organic fiber fabric, glass cloth, and the like.

The foil-like support member is formed by molding a metal raw material into a thin film, and examples thereof may include an aluminum foil, a copper foil, and the like.

The porous support member has a porous structure made of an organic, inorganic, or metal raw material, and examples thereof may include a porous organic material (e.g., polyurethane foam), a porous inorganic material (e.g., a zeolite sheet), a porous metal material (e.g., a porous metal sheet, a porous aluminum sheet), and the like.

The thickness of the support member is not particularly limited, and may be, for example, 0.1 $\mu$m to 100 $\mu$m, or 1 $\mu$m to 50 $\mu$m.

The heat insulation member may also be applied to applications such as a heat insulation material, thermal insulation material, or non-combustible material in the construction field, aviation field, automobile field, batteries, home appliances, semiconductor field, industrial facilities, and the like.

Hereinafter, the present invention will be described in detail with reference to the following examples. However, the following examples are illustrative of the present invention, and the contents of the present invention are not limited by the following Examples.

Examples

[Example 1]

Tetraethyl orthosilicate (TEOS) and water were mixed in a molar ratio of 1:4 and ethanol having a weight ratio of 1:1 with TEOS was added thereto to prepare a silica precursor solution. In order to promote hydrolysis of the silica precursor solution, an acid was added such that the pH of the silica precursor solution was 3 or less and stirred for 2 hours or more to prepare a hydrated TEOS solution. Ethanol having a weight ratio of 1:6 with the hydrated TEOS solution was added to prepare a silica sol. A base catalyst solution (5 wt% of NaOH aqueous solution) having a volume ratio of 99:1 with the silica sol was added to prepare a catalyzed sol. After filling 33.3 L of the catalyzed sol in an impregnation tank, a fiber (a glass fiber mat, 10 mm) as a substrate was passed therethrough to infiltrate the catalyzed sol into the fiber, wherein the catalyzed silica sol was impregnated into the fiber mat at a volume ratio of 1:1 (catalyzed silica sol:fiber). The fiber which passed through the impregnation tank to allow the catalyzed sol to infiltrate thereinto was gelled for 10 minutes while moving on a conveyor belt at a predetermined rate. At this time, the ambient atmosphere temperature at the top of the conveyor belt was maintained at 35 °C. Thereafter, the wet gel composite which has gelled was added with 109 vol% of a solution as an aging solution, which was obtained by diluting 2.9 wt% of methyltriethoxysilane (MTES) in ethanol having a water content of 10 wt%, based on the volume of the wet gel composite to be aged at a temperature of 75 °C for 1 hour. The aged wet gel composite was added with 90 vol% of a hexamethyldisilazane(HMDS)/ethanol solution (volume ratio of 5:95) as a surface modifier based on the volume of the wet gel composite, and then was subjected to surface modification at a temperature of 75 °C for 4 hours. Thereafter, supercritical drying was performed under the conditions of $CO_2$ 150 bar and 70 °C to produce an aerogel composite having a density of about 0.177 g/cc.

[Example 2]

Tetraethyl orthosilicate (TEOS) and water were mixed in a molar ratio of 1:4 and ethanol having a weight ratio of 1:1 with TEOS was added thereto to prepare a silica precursor solution. In order to promote hydrolysis of the silica precursor solution, an acid was added such that the pH of the silica precursor solution was 3 or less and stirred for 2 hours or more to prepare a hydrated TEOS solution. Ethanol having a weight ratio of 1:4 with the hydrated TEOS solution was added to prepare a silica sol. A base catalyst solution (5 wt% of NaOH aqueous solution) having a volume ratio of 99:1 with the silica sol was added to prepare a catalyzed sol. After filling 33.3 L of the catalyzed sol in an impregnation tank, a fiber (a glass fiber mat, 10 mm) as a substrate was passed therethrough to infiltrate the catalyzed sol into the fiber, wherein the catalyzed silica sol was impregnated into the fiber mat at a volume ratio of 0.7:1 (catalyzed silica sol:fiber). The fiber which passed through the impregnation tank to allow the catalyzed sol to infiltrate thereinto was gelled for 10 minutes while moving on a conveyor belt at a predetermined rate. At this time, the ambient atmosphere temperature at the top of the conveyor belt was maintained at 40 °C. Thereafter, the wet gel composite which has gelled was added with 109 vol% of a solution as an aging solution, which was obtained by diluting 2.9 wt% of methyltriethoxysilane (MTES) in ethanol having a water content of 10 wt%, based on the volume of the wet gel composite to be aged at a temperature of 75 °C for 1 hour. The aged wet gel composite was added with 90 vol% of a hexamethyldisilazane(HMDS)/ethanol solution (volume ratio of 5:95) as a surface modifier based on the volume of the wet gel composite, and then was subjected to surface modification at a temperature of 75 °C for 4 hours. Thereafter, supercritical drying was performed under the conditions of $CO_2$ 150 bar and 70 °C to produce an aerogel composite having a density of about 0.187 g/cc.

[Example 3]

Methyltriethoxysilane (MTES) and TEOS were mixed in a molar ratio of 97:3 to prepare a silica precursor composition. The silica precursor composition and water were mixed in a molar ratio of 1:10, and ethanol having a weight ratio of 1:2 with the silica precursor composition was added thereto to prepare a silica sol. In order to facilitate hydrolysis, hydrochloric acid was added to allow the pH of the silica sol to be 3 or less. A base catalyst solution (10 wt% of NaOH aqueous solution) having a volume ratio of 99:1 with the silica sol was added to prepare a catalyzed silica sol. After filling 33.3 L of the catalyzed sol in an impregnation tank, a fiber (a glass fiber mat, 5 mm) as a substrate was passed therethrough to infiltrate the catalyzed sol into the fiber, wherein the catalyzed silica sol was impregnated into the fiber mat at a volume ratio of 0.5:1 (catalyzed silica sol:fiber). The fiber which passed through the impregnation tank to allow the catalyzed sol to infiltrate thereinto was gelled for 10 minutes while moving on a conveyor belt at a predetermined rate. At this time, the ambient atmosphere temperature at the top of the conveyor belt was maintained at 35 °C. Thereafter, the wet gel composite which has gelled was added with 109 vol% of a solution, which was obtained by diluting ammonia water in ethanol (2.4 wt%), based on the volume of the wet gel composite to be aged at a temperature of 75 °C for 1 hour. The aged wet gel composite was added with 90 vol% of a hexamethyldisilazane(HMDS)/ethanol solution (volume ratio of 5:95) as a surface modifier based on the volume of the wet gel composite, and then was subjected to surface modification at a temperature of 75 °C for 4 hours. Thereafter, supercritical drying was performed under the conditions of $CO_2$ 150 bar and 70 °C to produce an aerogel composite having a density of about 0.170 g/cc.

[Example 4]

Methyltriethoxysilane (MTES) and TEOS were mixed in a molar ratio of 97:3 to prepare a silica precursor composition. The silica precursor composition and water were mixed in a molar ratio of 1:10, and ethanol having a weight ratio of 1:2 with the silica precursor composition was added thereto to prepare a silica sol. In order to facilitate hydrolysis, hydrochloric acid was added to allow the pH of the silica sol to be 3 or less. A base catalyst solution (10 wt% of NaOH aqueous solution) having a volume ratio of 99:1 with the silica sol was added to prepare a catalyzed silica sol. After filling 33.3 L of the catalyzed sol in an impregnation tank, a fiber (a glass fiber mat, 5 mm) as a substrate was passed therethrough to infiltrate the catalyzed sol into the fiber, wherein the catalyzed silica sol was impregnated into the fiber mat at a volume ratio of 0.7:1 (catalyzed silica sol:fiber). The fiber which passed through the impregnation tank to allow the catalyzed sol to infiltrate thereinto was gelled for 10 minutes while moving on a conveyor belt at a predetermined rate. At this time, the ambient atmosphere temperature at the top of the conveyor belt was maintained at 40 °C. Thereafter, the wet gel composite which has gelled was added with 109 vol% of a solution, which was obtained by diluting ammonia water in ethanol (2.4 wt%), based on the volume of the wet gel composite to be aged at a temperature of 75 °C for 1 hour. The aged wet gel composite was added with 90 vol% of a hexamethyldisilazane(HMDS)/ethanol solution (volume ratio of 5:95) as a surface modifier based on the volume of the wet gel composite, and then was subjected to surface modification at a temperature of 75 °C for 4 hours. Thereafter, supercritical drying was performed under the conditions of $CO_2$ 150 bar and 70 °C to produce an aerogel composite having a density of about 0.190 g/cc.

[Example 5]

Methyltriethoxysilane (MTES) and TEOS were mixed in a molar ratio of 97:3 to prepare a silica precursor composition. The silica precursor composition and water were mixed in a molar ratio of 1:10, and ethanol having a weight ratio of 1:2 with the silica precursor composition was added thereto to prepare a silica sol. In order to facilitate hydrolysis, hydrochloric acid was added to allow the pH of the silica sol to be 3 or less. A base catalyst solution (10 wt% of NaOH aqueous solution) having a volume ratio of 99:1 with the silica sol was added to prepare a catalyzed silica sol. After filling 33.3 L of the catalyzed sol in an impregnation tank, a fiber (a glass fiber mat, 5 mm) as a substrate was passed therethrough to infiltrate the catalyzed sol into the fiber, wherein the catalyzed silica sol was impregnated into the fiber mat at a volume ratio of 0.7:1 (catalyzed silica sol:fiber). The fiber which passed through the impregnation tank to allow the catalyzed sol to infiltrate thereinto was gelled for 10 minutes while moving on a conveyor belt at a predetermined rate. At this time, the ambient atmosphere temperature at the top of the conveyor belt was maintained at 40 °C. Thereafter, the wet gel composite which has gelled was added with 109 vol% of a solution as an aging solution, which was obtained by diluting 2.4 wt% of trimethylethoxysilane (TMES) in ethanol, based on the volume of the wet gel composite to be aged at a temperature of 75 °C for 1 hour. The aged wet gel composite was added with 90 vol% of a hexamethyldisilazane(HMDS)/ethanol solution (volume ratio of 5:95) as a surface modifier based on the volume of the wet gel composite, and then was subjected to surface modification at a temperature of 75 °C for 4 hours. Thereafter, supercritical drying was performed under the conditions of $CO_2$ 150 bar and 70 °C to produce an aerogel composite having a density of about 0.211 g/cc.

[Example 6]

Methyltriethoxysilane (MTES) and TEOS were mixed in a molar ratio of 97:3 to prepare a silica precursor composition. The silica precursor composition and water were mixed in a molar ratio of 1:10, and ethanol having a weight ratio of 1:2 with the silica precursor composition was added thereto to prepare a silica sol. In order to facilitate hydrolysis, hydrochloric acid was added to allow the pH of the silica sol to be 3 or less. A base catalyst solution (10 wt% of NaOH aqueous solution) having a volume ratio of 99:1 with the silica sol was added to prepare a catalyzed silica sol. After filling 33.3 L of the catalyzed sol in an impregnation tank, a fiber (a glass fiber mat, 5 mm) as a substrate was passed therethrough to infiltrate the catalyzed sol into the fiber, wherein the catalyzed silica sol was impregnated into the fiber mat at a volume ratio of 1:1 (catalyzed silica sol:fiber). The fiber which passed through the impregnation tank to allow the catalyzed sol to infiltrate thereinto was gelled for 10 minutes while moving on a conveyor belt at a predetermined rate. At this time, the ambient atmosphere temperature at the top of the conveyor belt was maintained at 35 °C. Thereafter, the wet gel composite which has gelled was added with 109 vol% of a solution as an aging solution, which was obtained by diluting 2.4 wt% of trimethylethoxysilane (TMES) in ethanol, based on the volume of the wet gel composite to be aged at a temperature of 75 °C for 1 hour. The aged wet gel composite was added with 90 vol% of a hexamethyldisilazane(HMDS)/ethanol solution (volume ratio of 5:95) as a surface modifier based on the volume of the wet gel composite, and then was subjected to surface modification at a temperature of 75 °C for 4 hours. Thereafter, supercritical drying was performed under the conditions of $CO_2$ 150 bar and 70 °C to produce an aerogel composite having a density of about 0.206 g/cc.

[Example 7]

Tetraethyl orthosilicate (TEOS) and water were mixed in a molar ratio of 1:4 and ethanol having a weight ratio of 1:1 with TEOS was added thereto to prepare a silica precursor solution. In order to promote hydrolysis of the silica precursor solution, an acid was added such that the pH of the silica precursor solution was 3 or less and stirred for 2 hours or more to prepare a hydrated TEOS solution. Ethanol having a weight ratio of 1:4 with the hydrated TEOS solution was added to prepare a silica sol. A base catalyst solution (5 wt% of NaOH aqueous solution) having a volume ratio of 99:1 with the silica sol was added to prepare a catalyzed sol. After filling 33.3 L of the catalyzed sol in an impregnation tank, a fiber (a glass fiber mat, 3 mm) as a substrate was passed therethrough to infiltrate the catalyzed sol into the fiber, wherein the catalyzed silica sol was impregnated into the fiber mat at a volume ratio of 0.7:1 (catalyzed silica sol:fiber). The fiber which passed through the impregnation tank to allow the catalyzed sol to infiltrate thereinto was gelled for 10 minutes while moving on a conveyor belt at a predetermined rate. At this time, the ambient atmosphere temperature at the top of the conveyor belt was maintained at 35 °C. After the gelation was completed, stabilization was performed at room temperature (25 °C) for 10 minutes, and then primary aging was performed in an oven at 70 °C for 50 minutes. Thereafter, a mixture of ethanol and ammonia water (volume ratio of 98:2) was prepared and added to the wet gel composite which has gelled in an amount of 1.6 times the volume of the silica sol, and then secondary aging was performed in an oven at 70 °C for 1 hour. The aged wet gel composite was added with 90 vol% of a solution (2 vol%) as a surface modifier, which was obtained by diluting trimethylethoxysilane(TMES) in ethanol, based on the volume of the wet gel composite, and then was subjected to surface modification at a temperature of 75 °C for 2 hours. Thereafter, supercritical drying was performed under the conditions of $CO_2$ 150 bar and 70 °C to produce an aerogel composite having a density of about 0.189 g/cc.

[Example 8]

Tetraethyl orthosilicate (TEOS) and water were mixed in a molar ratio of 1:4 and ethanol having a weight ratio of 1:1 with TEOS was added thereto to prepare a silica precursor solution. In order to promote hydrolysis of the silica precursor solution, an acid was added such that the pH of the silica precursor solution was 3 or less and stirred for 2 hours or more to prepare a hydrated TEOS solution. Ethanol having a weight ratio of 1:6 with the hydrated TEOS solution was added to prepare a silica sol. A base catalyst solution (5 wt% of NaOH aqueous solution) having a volume ratio of 99:1 with the silica sol was added to prepare a catalyzed sol. After filling 33.3 L of the catalyzed sol in an impregnation tank, a fiber (a glass fiber mat, 3 mm) as a substrate was passed therethrough to infiltrate the catalyzed sol into the fiber, wherein the catalyzed silica sol was impregnated into the fiber mat at a volume ratio of 0.7:1 (catalyzed silica sol:fiber). The fiber which passed through the impregnation tank to allow the catalyzed sol to infiltrate thereinto was gelled for 10 minutes while moving on a conveyor belt at a predetermined rate. At this time, the ambient atmosphere temperature at the top of the conveyor belt was maintained at 25 °C. After the gelation was completed, stabilization was performed at room temperature (25 °C) for 10 minutes, and then primary aging was performed in an oven at 70 °C for 50 minutes. Thereafter, the wet gel composite which has gelled was added with 109 vol% of a solution, which was prepared by diluting 2.9 wt% of methyltriethoxysilane (MTES) in ethanol with a water content of 10 wt%, based on the volume of the wet gel composite to be subjected to secondary aging in an oven at 75 °C for 1 hour. The aged wet gel composite was added with 90 vol% of a solution (2 vol%) as a surface modifier, which was obtained by diluting trimethylethoxysilane(TMES) in ethanol, based on the volume of the wet gel composite, and then was subjected to surface modification at a temperature of 75 °C for 2 hours. Thereafter, supercritical drying was performed under the conditions of $CO_2$ 150 bar and 70 °C to produce an aerogel composite having a density of about 0.192 g/cc.

[Example 9]

Tetraethyl orthosilicate (TEOS) and water were mixed in a molar ratio of 1:4 and ethanol having a weight ratio of 1:1 with TEOS was added thereto to prepare a silica precursor solution. In order to promote hydrolysis of the silica precursor solution, an acid was added such that the pH of the silica precursor solution was 3 or less and stirred for 2 hours or more to prepare a hydrated TEOS solution. Ethanol having a weight ratio of 1:6 with the hydrated TEOS solution was added to prepare a silica sol. A base catalyst solution (5 wt% of NaOH aqueous solution) having a volume ratio of 99:1 with the silica sol was added to prepare a catalyzed sol. After filling 33.3 L of the catalyzed sol in an impregnation tank, a fiber (a glass fiber fiber mat, 5 mm) as a substrate was passed therethrough to infiltrate the catalyzed sol into the fiber, wherein the catalyzed silica sol was impregnated into the fiber mat at a volume ratio of 0.7:1 (catalyzed silica sol:fiber). The fiber which passed through the impregnation tank to allow the catalyzed sol to infiltrate thereinto was gelled for 10 minutes while moving on a conveyor belt at a predetermined rate. At this time, the ambient atmosphere temperature at the top of the conveyor belt was maintained at 35 °C. After the gelation was completed, stabilization was performed at room temperature (25 °C) for 10 minutes, and then primary aging was performed in an oven at 70 °C for 50 minutes. Thereafter, the wet gel composite which has gelled was added with 109 vol% of a solution, which was prepared by diluting 2.9 wt% of methyltriethoxysilane (MTES) in ethanol with a water content of 10 wt%, based on the volume of the wet gel composite to be subjected to secondary aging in an oven at 75 °C for 1 hour. Thereafter, supercritical drying was performed under the conditions of $CO_2$ 150 bar and 70 °C to produce an aerogel composite having a density of about 0.204 g/cc.

[Comparative Example 1]

A pre-hydrolyzed TEOS (silica content: 20 wt%, HTEOS), ethanol, and distilled water were respectively added at a weight ratio of 1:2:0.22 and then mixed to prepare a silica precursor composition. Ethanol, NaOH (5 wt% of aqueous solution), and trimethylethoxysilane (TMES) were respectively added at a weight ratio of 1:0.3:1 and then mixed to prepare a catalyst composition. In a reactor, the silica precursor composition and the catalyst composition prepared above were mixed at a volume ratio of 9:1 to prepare a catalyzed silica sol. A fiber (a glass fiber mat, 10 mm) as a substrate was passed through to infiltrate the catalyzed sol into the fiber, wherein the catalyzed silica sol was impregnated at a volume ratio of 1:1 (catalyzed silica sol:glass fiber mat) with respect to the volume of the glass fiber mat, followed by performing gelation thereon 10 minutes later to prepare a wet gel composite. The fiber which passed through the impregnation tank to be infiltrated with the catalyzed sol was left to stand at room temperature for 24 hours to be subjected to gelation, aging, and surface modification. Thereafter, supercritical drying was performed under the conditions of $CO_2$ 150 bar and 70 °C to produce an aerogel composite having a density of about 0.206 g/cc.

[Comparative Example 2]

Tetraethyl orthosilicate (TEOS) and water were mixed in a molar ratio of 1:4 and ethanol having a weight ratio of 1:1 with TEOS was added thereto to prepare a silica precursor solution. In order to promote hydrolysis of the silica precursor solution, an acid was added such that the pH of the silica precursor solution was 3 or less and stirred for 2 hours or more to prepare a hydrated TEOS solution. Ethanol having a weight ratio of 1:4 with the hydrated TEOS solution was added to prepare a silica sol. A base catalyst solution (5 wt% of NaOH aqueous solution) having a volume ratio of 99:1 with the silica sol was added to prepare a catalyzed sol. A fiber (a glass fiber mat, 10 mm) as a substrate was passed through to infiltrate the catalyzed sol into the fiber, wherein the catalyzed silica sol was impregnated at a volume ratio of 0.3:1 (catalyzed silica sol:glass fiber mat) with respect to the volume of the glass fiber mat, followed by performing gelation thereon 10 minutes later to prepare a wet gel composite. The fiber which passed through the impregnation tank to allow the catalyzed sol to infiltrate thereinto was gelled for 10 minutes while moving on a conveyor belt at a predetermined rate. At this time, the ambient atmosphere temperature at the top of the conveyor belt was maintained at 35 °C. Thereafter, the wet gel composite which has gelled was left to stand in a chamber of 70 °C for 24 hours to be aged. The aged wet gel composite was added with 90 vol% of a hexamethyldisilazane(HMDS)/ethanol solution (volume ratio of 5:95) as a surface modifier based on the volume of the wet gel composite, and then was subjected to surface modification at a temperature of 75 °C for 4 hours. Thereafter, supercritical drying was performed under the conditions of $CO_2$ 150 bar and 70 °C to produce an aerogel composite having a density of about 0.142 g/cc.

[Comparative Example 3]

Tetraethyl orthosilicate (TEOS) and water were mixed in a molar ratio of 1:4 and ethanol having a weight ratio of 1:1 with TEOS was added thereto to prepare a silica precursor solution. In order to promote hydrolysis of the silica precursor solution, an acid was added such that the pH of the silica precursor solution was 3 or less and stirred for 2 hours or more to prepare a hydrated TEOS solution. Ethanol having a weight ratio of 1:4 with the hydrated TEOS solution was added to prepare a silica sol. A base catalyst solution (5 wt% of NaOH aqueous solution) having a volume ratio of 99:1 with the silica sol was added to prepare a catalyzed sol. A fiber (a glass fiber mat, 3 mm) as a substrate was passed through to infiltrate the catalyzed sol into the fiber, wherein the catalyzed silica sol was impregnated at a volume ratio of 0.5:1 (catalyzed silica sol:glass fiber mat) with respect to the volume of the glass fiber mat, followed by performing gelation thereon 10 minutes later to prepare a wet gel composite. The fiber which passed through the impregnation tank to allow the catalyzed sol to infiltrate thereinto was gelled at room temperature for 10 minutes while moving on a conveyor belt at a predetermined rate. After the gelation was completed, stabilization was performed at room temperature (25 °C) for 10 minutes, and then primary aging was performed in an oven at 70 °C for 50 minutes. Thereafter, a mixture of ethanol and ammonia water (volume ratio of 98:2) was prepared and added to the wet gel composite which has gelled in an amount of 1.6 times the volume of the silica sol, and then secondary aging was performed in an oven at 70 °C for 1 hour. Thereafter, supercritical drying was performed under the conditions of $CO_2$ 150 bar and 70 °C to produce an aerogel composite having a density of about 0.168 g/cc.

[Experimental Example 1] Measurement of density and pore size-specific distribution

1. Density

For the silica aerogel composite produced in each of Examples and Comparative Examples, five specimens having a size of 10 cm X 10 cm were prepared, and then the weight of each specimen was measured, and the thickness of each specimen was measured using HFM 436 equipment of NETZSCH Co., Ltd. The measured weight and thickness, and the size were used to calculate the density, and the average density of the five specimens was determined as the final density, and the results are shown in Table 1 below.

2. Volume ratio (%) of effective pores with pore diameter of 30 nm or less

For each silica aerogel composite prepared in each of the Examples and Comparative Examples, the specific surface area, pore volume, and pore diameter were measured by analyzing the amount of nitrogen adsorption and desorption according to partial pressure (0.11 < p/po < 1) using an ASAP 2010 instrument manufactured by Micromeritics Co., Ltd. From the measured pore volume, the volume ratio of pores (effective pores) having a pore diameter of 30 nm or less was calculated, and the results are shown in Table 1 below.

[Table 1]

| Classifications | Density (g/cc) | Effective pore volume ratio (%) |
|---|---|---|
| Example 1 | 0.177 | 35.6 |
| Example 2 | 0.187 | 31.1 |
| Example 3 | 0.170 | 40.2 |
| Example 4 | 0.190 | 38.7 |
| Example 5 | 0.211 | 33.8 |
| Example 6 | 0.206 | 37.2 |
| Example 7 | 0.189 | 30.3 |
| Example 8 | 0.192 | 37.3 |
| Example 9 | 0.204 | 38.1 |
| Comparative Example 1 | 0.206 | 22.0 |

(continued)

| Classifications | Density (g/cc) | Effective pore volume ratio (%) |
|---|---|---|
| Comparative Example 2 | 0.142 | 20.9 |
| Comparative Example 3 | 0.168 | 20.1 |

[Experimental Example 2] Measurement of recovery rate and heat transmission coefficient after compression of aerogel composite

1. Compression recovery rate

Specimens each having a size of 20 cm X 20 cm were prepared respectively using the aerogel composites obtained in Examples and Comparative Examples, and, where the width or length of a produced aerogel composite was less than 20 cm, two or more specimens were arranged side-by-side in parallel so that the specimen size became 20 cm X 20 cm, after which measurements may also be performed on such rearranged specimens, and then compressed for 10 minutes under respective pressure conditions using the QM900A-15T press equipment of QMESYS Co., Ltd. The thickness of each of the aerogel composites was measured using the HFM436 equipment of Netzsch Co., Ltd., before the compression and 1 hour after the completion of the compression, and the compression recovery rate was calculated according to Equation 1 below, and the results are shown in Table 2 below. However, a pressure value shown in Table 2 below is a value of pressure applied per unit area of a specimen, and means a value obtained by multiplying a cylinder area of the press equipment by a set pressure value and dividing the product by the area of the specimen as set forth in Equation 2 below. The cylinder radius of the QM900A-15T press equipment used in the present experiment is 6.25 cm, and the cylinder size is 12.5 cm.

Compression recovery rate (%) = {(Cross-sectional thickness of aerogel composite after compression)/(Cross-sectional thickness of aerogel composite before compression)} X 100    [Equation 1]

Actual pressure value = (Radius of inner diameter of cylinder of press equipment X Radius of inner diameter of cylinder of press equipment X 3.14 X set pressure value) / (Area of specimen)    [Equation 2]

2. Heat transmission coefficient

The experiment was performed in the same manner as in 1 above, and the thermal conductivity of each of the aerogel composites was measured using the HFM436 equipment of Netzsch Co., Ltd., before the compression and 1 hour after the completion of the compression, and then the heat transmission coefficient was calculated, and the increase rate of the heat transmission coefficient compared to that before the compression was evaluated, and the results are shown in Table 3 below.

In addition, in order to confirm the degree of change in the heat transmission coefficient before and after the compression, the average value (b) of the heat transmission coefficients measured after performing compression with a pressure of non-compression (0 bar), 3 bar, 9 bar, and 24 bar was calculated, and as shown in Equation 3 below, the difference between the heat transmission coefficient (a) measured after performing compression with a pressure of each of 0 bar, 3 bar, 9 bar, and 24 bar and the average value (b) of the heat transmission coefficients, and A, which is the value obtained by dividing the difference by the average value (b) of the heat transmission coefficients, were calculated, and the results are shown in Table 4.

{(Heat transmission coefficient (a) before and after compression - Average value (b) of heat transmission coefficients before and after compression) }= (Average value (b) of heat transmission coefficients before and after compression) X A    [Equation 3]

In addition, in order to confirm the degree of change in the heat transmission coefficient after the compression, the average value (d) of the heat transmission coefficients measured after performing compression with a pressure of 3 bar, 9 bar, and 24 bar was calculated, and as shown in Equation 4 below, the difference between the heat transmission coefficient (c) measured after performing compression with a pressure of 3 bar, 9 bar, or 24 bar and the average value (d), and B, which is the value obtained by dividing the difference by the average value (d) of the heat transmission coefficients, were calculated, and the results are shown in Table 5.

(Heat transmission coefficient (c) after compression - Average value (d) of heat transmission coefficients after compression) = (Average value (d) of heat transmission coefficients after compression) X B     [Equation 4]

Each result value shown in Tables 2 to 5 below is rounded from three decimal places and expressed to two decimal places.

[Table 2]

| Classifications | Pressure conditions | Thickness after compression (mm) | Compression recovery rate (%) |
|---|---|---|---|
| Example 1 | - | 10.4 | - |
| | 3 bar, 10 min | 9.1 | 87.50 |
| | 9 bar, 10 min | 8.2 | 78.85 |
| | 15 bar, 10 min | 8.0 | 76.92 |
| | 24 bar, 10 min | 8.1 | 77.88 |
| | 30 bar, 10 min | 7.9 | 75.96 |
| | 33 bar, 10 min | 8.0 | 76.92 |
| Example 2 | - | 8.6 | - |
| | 3 bar, 10 min | 8.2 | 95.35 |
| | 9 bar, 10 min | 8.0 | 93.02 |
| | 15 bar, 10 min | 7.9 | 91.86 |
| | 24 bar, 10 min | 7.7 | 89.53 |
| | 30 bar, 10 min | 7.4 | 86.05 |
| | 33 bar, 10 min | 6.9 | 80.23 |
| Example 3 | - | 3.6 | - |
| | 3 bar, 10 min | 3.4 | 94.44 |
| | 9 bar, 10 min | 3.3 | 91.67 |
| | 15 bar, 10 min | 3.2 | 88.89 |
| | 24 bar, 10 min | 3.2 | 88.89 |
| | 30 bar, 10 min | 3.1 | 86.11 |
| | 33 bar, 10 min | 3.0 | 83.33 |
| Example 4 | - | 4.6 | - |
| | 3 bar, 10 min | 4.4 | 95.65 |
| | 9 bar, 10 min | 4.4 | 95.65 |
| | 15 bar, 10 min | 4.2 | 91.30 |
| | 24 bar, 10 min | 4.1 | 89.13 |
| | 30 bar, 10 min | 4.0 | 86.96 |
| | 33 bar, 10 min | 3.9 | 84.78 |

(continued)

| Classifications | Pressure conditions | Thickness after compression (mm) | Compression recovery rate (%) |
|---|---|---|---|
| Example 5 | - | 4.7 | - |
| | 3 bar, 10 min | 4.6 | 97.87 |
| | 9 bar, 10 min | 4.2 | 89.36 |
| | 15 bar, 10 min | 4.2 | 89.36 |
| | 24 bar, 10 min | 4.1 | 87.23 |
| | 30 bar, 10 min | 4.1 | 87.23 |
| | 33 bar, 10 min | 4.0 | 85.11 |
| Example 6 | - | 5.0 | - |
| | 3 bar, 10 min | 4.6 | 92.00 |
| | 9 bar, 10 min | 3.9 | 78.00 |
| | 15 bar, 10 min | 3.7 | 74.00 |
| | 24 bar, 10 min | 3.7 | 74.00 |
| | 30 bar, 10 min | 3.6 | 72.00 |
| | 33 bar, 10 min | 3.6 | 72.00 |
| Example 7 | - | 2.7 | - |
| | 3 bar, 10 min | 2.6 | 96.30 |
| | 9 bar, 10 min | 2.5 | 92.59 |
| | 15 bar, 10 min | 2.5 | 92.59 |
| | 24 bar, 10 min | 2.4 | 88.89 |
| | 30 bar, 10 min | 2.3 | 85.19 |
| | 33 bar, 10 min | 2.3 | 85.19 |
| Example 8 | - | 2.7 | - |
| | 3 bar, 10 min | 2.7 | 100.00 |
| | 9 bar, 10 min | 2.6 | 96.30 |
| | 15 bar, 10 min | 2.6 | 96.30 |
| | 24 bar, 10 min | 2.5 | 92.59 |
| | 30 bar, 10 min | 2.5 | 92.59 |
| | 33 bar, 10 min | 2.4 | 88.89 |
| Example 9 | - | 3.9 | 100.00 |
| | 3 bar, 10 min | 3.5 | 89.74 |
| | 9 bar, 10 min | 3.1 | 79.49 |
| | 15 bar, 10 min | 3.0 | 76.92 |
| | 24 bar, 10 min | 2.9 | 74.36 |
| | 30 bar, 10 min | 2.9 | 74.36 |
| | 33 bar, 10 min | 2.8 | 71.79 |

(continued)

| Classifications | Pressure conditions | Thickness after compression (mm) | Compression recovery rate (%) |
|---|---|---|---|
| Comparative Example 1 | - | 9.5 | - |
| | 3 bar, 10 min | 6.0 | 63.16 |
| | 9 bar, 10 min | 5.0 | 52.63 |
| | 15 bar, 10 min | 4.8 | 50.53 |
| | 24 bar, 10 min | 4.7 | 49.47 |
| | 30 bar, 10 min | 4.9 | 51.58 |
| | 33 bar, 10 min | 5.0 | 52.63 |
| Comparative Example 2 | - | 6.3 | - |
| | 3 bar, 10 min | 4.4 | 69.84 |
| | 9 bar, 10 min | 3.7 | 58.73 |
| | 15 bar, 10 min | 3.3 | 52.38 |
| | 24 bar, 10 min | 3.1 | 49.21 |
| | 30 bar, 10 min | 2.9 | 46.03 |
| | 33 bar, 10 min | 2.9 | 46.03 |
| Comparative Example 3 | - | 2.6 | - |
| | 3 bar, 10 min | 1.7 | 65.38 |
| | 9 bar, 10 min | 1.5 | 57.69 |
| | 15 bar, 10 min | 1.4 | 53.85 |
| | 24 bar, 10 min | 1.1 | 42.31 |
| | 30 bar, 10 min | 1.0 | 38.46 |
| | 33 bar, 10 min | 0.9 | 34.62 |

[Table 3]

| Classifications | Pressure conditions | Heat transmission coefficient (W/m$^2$K) | Heat transmission coefficient increase rate (Times) |
|---|---|---|---|
| Example 1 | - | 2.26 | - |
| | 3 bar, 10 min | 2.59 | 1.15 |
| | 9 bar, 10 min | 2.89 | 1.28 |
| | 15 bar, 10 min | 3.05 | 1.35 |
| | 24 bar, 10 min | 3.09 | 1.37 |
| | 30 bar, 10 min | 3.19 | 1.41 |
| | 33 bar, 10 min | 3.24 | 1.43 |
| Example 2 | - | 2.42 | - |
| | 3 bar, 10 min | 2.55 | 1.05 |
| | 9 bar, 10 min | 2.66 | 1.10 |
| | 15 bar, 10 min | 2.75 | 1.14 |
| | 24 bar, 10 min | 2.87 | 1.19 |
| | 30 bar, 10 min | 3.04 | 1.26 |
| | 33 bar, 10 min | 3.29 | 1.36 |

(continued)

| Classifications | Pressure conditions | Heat transmission coefficient (W/m²K) | Heat transmission coefficient increase rate (Times) |
|---|---|---|---|
| Example 3 | - | 6.42 | - |
| | 3 bar, 10 min | 6.85 | 1.07 |
| | 9 bar, 10 min | 7.18 | 1.12 |
| | 15 bar, 10 min | 7.44 | 1.16 |
| | 24 bar, 10 min | 7.47 | 1.16 |
| | 30 bar, 10 min | 7.74 | 1.21 |
| | 33 bar, 10 min | 8.07 | 1.26 |
| Example 4 | - | 4.30 | - |
| | 3 bar, 10 min | 4.55 | 1.06 |
| | 9 bar, 10 min | 4.66 | 1.08 |
| | 15 bar, 10 min | 5.14 | 1.19 |
| | 24 bar, 10 min | 5.29 | 1.23 |
| | 30 bar, 10 min | 5.53 | 1.28 |
| | 33 bar, 10 min | 5.72 | 1.33 |
| Example 5 | - | 4.26 | - |
| | 3 bar, 10 min | 4.43 | 1.04 |
| | 9 bar, 10 min | 4.93 | 1.16 |
| | 15 bar, 10 min | 4.98 | 1.17 |
| | 24 bar, 10 min | 5.12 | 1.20 |
| | 30 bar, 10 min | 5.15 | 1.21 |
| | 33 bar, 10 min | 5.33 | 1.25 |
| Example 6 | - | 3.16 | - |
| | 3 bar, 10 min | 3.48 | 1.10 |
| | 9 bar, 10 min | 4.49 | 1.42 |
| | 15 bar, 10 min | 4.92 | 1.56 |
| | 24 bar, 10 min | 4.89 | 1.55 |
| | 30 bar, 10 min | 5.00 | 1.58 |
| | 33 bar, 10 min | 5.39 | 1.71 |
| Example 7 | - | 6.93 | - |
| | 3 bar, 10 min | 7.27 | 1.05 |
| | 9 bar, 10 min | 7.60 | 1.10 |
| | 15 bar, 10 min | 7.60 | 1.10 |
| | 24 bar, 10 min | 7.96 | 1.15 |
| | 30 bar, 10 min | 8.30 | 1.20 |
| | 33 bar, 10 min | 8.39 | 1.21 |

(continued)

| Classifications | Pressure conditions | Heat transmission coefficient (W/m$^2$K) | Heat transmission coefficient increase rate (Times) |
|---|---|---|---|
| Example 8 | - | 8.85 | - |
| | 3 bar, 10 min | 8.89 | 1.00 |
| | 9 bar, 10 min | 9.23 | 1.04 |
| | 15 bar, 10 min | 9.27 | 1.05 |
| | 24 bar, 10 min | 9.88 | 1.12 |
| | 30 bar, 10 min | 10.00 | 1.13 |
| | 33 bar, 10 min | 10.46 | 1.18 |
| Example 9 | - | 6.44 | 1.00 |
| | 3 bar, 10 min | 6.75 | 1.05 |
| | 9 bar, 10 min | 7.73 | 1.20 |
| | 15 bar, 10 min | 8.02 | 1.25 |
| | 24 bar, 10 min | 8.29 | 1.29 |
| | 30 bar, 10 min | 8.48 | 1.32 |
| | 33 bar, 10 min | 8.89 | 1.38 |
| Comparative Example 1 | - | 1.84 | - |
| | 3 bar, 10 min | 2.73 | 1.48 |
| | 9 bar, 10 min | 3.44 | 1.87 |
| | 15 bar, 10 min | 4.38 | 2.38 |
| | 24 bar, 10 min | 5.64 | 3.07 |
| | 30 bar, 10 min | 5.57 | 3.03 |
| | 33 bar, 10 min | 5.65 | 3.07 |
| Comparative Example 2 | - | 3.89 | - |
| | 3 bar, 10 min | 6.09 | 1.57 |
| | 9 bar, 10 min | 8.51 | 2.19 |
| | 15 bar, 10 min | 9.97 | 2.56 |
| | 24 bar, 10 min | 10.94 | 2.81 |
| | 30 bar, 10 min | 11.76 | 3.02 |
| | 33 bar, 10 min | 11.83 | 3.04 |
| Comparative Example 3 | - | 9.38 | - |
| | 3 bar, 10 min | 16.29 | 1.74 |
| | 9 bar, 10 min | 20.73 | 2.21 |
| | 15 bar, 10 min | 23.00 | 2.45 |
| | 24 bar, 10 min | 29.55 | 3.15 |
| | 30 bar, 10 min | 33.10 | 3.53 |
| | 33 bar, 10 min | 36.89 | 3.93 |

[Table 4]

| Classifications | Pressure conditions | Heat transmission coefficient before and after compression (a) (W/m²K) | Average value of heat transmission coefficients before and after compression (b) (W/m²K) | Deviation of heat transmission coefficients before and after compression (a-b) (W/m²K) | Deviation of heat transmission coefficients before and after compression/average value of heat transmission coefficients (a-b/b = A) |
|---|---|---|---|---|---|
| Example 1 | 0 bar, 10 min | 2.26 | 2.71 | -0.45 | -0.17 |
| | 3 bar, 10 min | 2.59 | | -0.12 | -0.04 |
| | 9 bar, 10 min | 2.89 | | 0.18 | 0.07 |
| | 24 bar, 10 min | 3.09 | | 0.38 | 0.14 |
| Example 2 | 0 bar, 10 min | 2.42 | 2.63 | -0.21 | -0.08 |
| | 3 bar, 10 min | 2.55 | | -0.08 | -0.03 |
| | 9 bar, 10 min | 2.66 | | 0.03 | 0.01 |
| | 24 bar, 10 min | 2.87 | | 0.24 | 0.09 |
| Example 3 | 0 bar, 10 min | 6.42 | 6.98 | -0.56 | -0.08 |
| | 3 bar, 10 min | 6.85 | | -0.13 | -0.02 |
| | 9 bar, 10 min | 7.18 | | 0.20 | 0.03 |
| | 24 bar, 10 min | 7.47 | | 0.49 | 0.07 |
| Example 4 | 0 bar, 10 min | 4.30 | 4.70 | -0.40 | -0.08 |
| | 3 bar, 10 min | 4.55 | | -0.15 | -0.03 |
| | 9 bar, 10 min | 4.66 | | -0.04 | -0.01 |
| | 24 bar, 10 min | 5.29 | | 0.59 | 0.13 |
| Example 5 | 0 bar, 10 min | 4.26 | 4.69 | -0.43 | -0.09 |
| | 3 bar, 10 min | 4.43 | | -0.26 | -0.05 |
| | 9 bar, 10 min | 4.93 | | 0.24 | 0.05 |
| | 24 bar, 10 min | 5.12 | | 0.43 | 0.09 |
| Example 6 | 0 bar, 10 min | 3.16 | 4.01 | -0.85 | -0.21 |
| | 3 bar, 10 min | 3.48 | | -0.53 | -0.13 |
| | 9 bar, 10 min | 4.49 | | 0.48 | 0.12 |
| | 24 bar, 10 min | 4.89 | | 0.88 | 0.22 |
| Example 7 | 0 bar, 10 min | 6.93 | 7.44 | -0.51 | -0.07 |
| | 3 bar, 10 min | 7.27 | | -0.17 | -0.02 |
| | 9 bar, 10 min | 7.60 | | 0.16 | 0.02 |
| | 24 bar, 10 min | 7.96 | | 0.52 | 0.07 |
| Example 8 | 0 bar, 10 min | 8.85 | 9.21 | -0.36 | -0.04 |
| | 3 bar, 10 min | 8.89 | | -0.32 | -0.03 |
| | 9 bar, 10 min | 9.23 | | 0.02 | 0.00 |
| | 24 bar, 10 min | 9.88 | | 0.67 | 0.07 |

(continued)

| Classifications | Pressure conditions | Heat transmission coefficient before and after compression (a) (W/m²K) | Average value of heat transmission coefficients before and after compression (b) (W/m²K) | Deviation of heat transmission coefficients before and after compression (a-b) (W/m²K) | Deviation of heat transmission coefficients before and after compression/average value of heat transmission coefficients (a-b/b = A) |
|---|---|---|---|---|---|
| Example 9 | 0 bar, 10 min | 6.44 | 7.30 | -0.86 | -0.12 |
| | 3 bar, 10 min | 6.75 | | -0.55 | -0.08 |
| | 9 bar, 10 min | 7.73 | | 0.43 | 0.06 |
| | 24 bar, 10 min | 8.29 | | 0.99 | 0.14 |
| Comparative Example 1 | 0 bar, 10 min | 1.84 | 3.41 | -1.57 | -0.46 |
| | 3 bar, 10 min | 2.73 | | -0.68 | -0.20 |
| | 9 bar, 10 min | 3.44 | | 0.03 | 0.01 |
| | 24 bar, 10 min | 5.64 | | 2.23 | 0.65 |
| Comparative Example 2 | 0 bar, 10 min | 3.89 | 7.36 | -3.47 | -0.47 |
| | 3 bar, 10 min | 6.09 | | -1.27 | -0.17 |
| | 9 bar, 10 min | 8.51 | | 1.15 | 0.16 |
| | 24 bar, 10 min | 10.94 | | 3.58 | 0.49 |
| Comparative Example 3 | 0 bar, 10 min | 9.38 | 18.99 | -9.61 | -0.51 |
| | 3 bar, 10 min | 16.29 | | -2.70 | -0.14 |
| | 9 bar, 10 min | 20.73 | | 1.74 | 0.09 |

[Table 5]

| Classifications | Pressure conditions | Heat transmission coefficient after compression (c) (W/m²K) | Average value of heat transmission coefficients after compression (d) (W/m²K) | Deviation of heat transmission coefficients after compression (c-d) (W/m²K) | Deviation of heat transmission coefficients after compression/average value of heat transmission coefficients (c-d/d = B) |
|---|---|---|---|---|---|
| Example 1 | 3 bar, 10 min | 2.59 | 2.86 | -0.27 | -0.09 |
| | 9 bar, 10 min | 2.89 | | 0.03 | 0.01 |
| | 24 bar, 10 min | 3.09 | | 0.23 | 0.08 |
| Example 2 | 3 bar, 10 min | 2.55 | 2.69 | -0.14 | -0.05 |
| | 9 bar, 10 min | 2.66 | | -0.03 | -0.01 |
| | 24 bar, 10 min | 2.87 | | 0.18 | 0.07 |

(continued)

| Classifications | Pressure conditions | Heat transmission coefficient after compression (c) (W/m$^2$K) | Average value of heat transmission coefficients after compression (d) (W/m$^2$K) | Deviation of heat transmission coefficients after compression (c-d) (W/m$^2$K) | Deviation of heat transmission coefficients after compression/av erage value of heat transmission coefficients (c-d/d = B) |
|---|---|---|---|---|---|
| Example 3 | 3 bar, 10 min | 6.85 | 7.17 | -0.32 | -0.04 |
| | 9 bar, 10 min | 7.18 | | 0.01 | 0.00 |
| | 24 bar, 10 min | 7.47 | | 0.30 | 0.04 |
| Example 4 | 3 bar, 10 min | 4.55 | 4.83 | -0.28 | -0.06 |
| | 9 bar, 10 min | 4.66 | | -0.17 | -0.04 |
| | 24 bar, 10 min | 5.29 | | 0.46 | 0.10 |
| Example 5 | 3 bar, 10 min | 4.43 | 4.83 | -0.40 | -0.08 |
| | 9 bar, 10 min | 4.93 | | 0.10 | 0.02 |
| | 24 bar, 10 min | 5.12 | | 0.29 | 0.06 |
| Example 6 | 3 bar, 10 min | 3.48 | 4.29 | -0.81 | -0.19 |
| | 9 bar, 10 min | 4.49 | | 0.20 | 0.05 |
| | 24 bar, 10 min | 4.89 | | 0.60 | 0.14 |
| Example 7 | 3 bar, 10 min | 7.27 | 7.61 | -0.34 | -0.04 |
| | 9 bar, 10 min | 7.60 | | -0.01 | 0.00 |
| | 24 bar, 10 min | 7.96 | | 0.35 | 0.05 |
| Example 8 | 3 bar, 10 min | 8.89 | 9.33 | -0.44 | -0.05 |
| | 9 bar, 10 min | 9.23 | | -0.10 | -0.01 |
| | 24 bar, 10 min | 9.88 | | 0.55 | 0.06 |

(continued)

| Classifications | Pressure conditions | Heat transmission coefficient after compression (c) (W/m²K) | Average value of heat transmission coefficients after compression (d) (W/m²K) | Deviation of heat transmission coefficients after compression (c-d) (W/m²K) | Deviation of heat transmission coefficients after compression/av erage value of heat transmission coefficients (c-d/d = B) |
|---|---|---|---|---|---|
| Example 9 | 3 bar, 10 min | 6.75 | 7.59 | -0.84 | -0.11 |
| | 9 bar, 10 min | 7.73 | | 0.14 | 0.02 |
| | 24 bar, 10 min | 8.29 | | 0.70 | 0.09 |
| Comparative Example 1 | 3 bar, 10 min | 2.73 | 3.94 | -1.21 | -0.31 |
| | 9 bar, 10 min | 3.44 | | -0.50 | -0.13 |
| | 24 bar, 10 min | 5.64 | | 1.70 | 0.43 |
| Comparative Example 2 | 3 bar, 10 min | 6.09 | 8.51 | -2.42 | -0.28 |
| | 9 bar, 10 min | 8.51 | | 0.00 | 0.00 |
| | 24 bar, 10 min | 10.94 | | 2.43 | 0.29 |
| Comparative Example 3 | 3 bar, 10 min | 16.29 | 22.19 | -5.90 | -0.27 |
| | 9 bar, 10 min | 20.73 | | -1.46 | -0.07 |
| | 24 bar, 10 min | 29.55 | | 7.36 | 0.33 |

As shown in Tables 2 to 5 above, compared to the aerogel composites of Comparative Examples 1 to 3, the aerogel composites of Examples 1 to 9 produced according to the present invention were confirmed to have a high compression recovery rate, a small degree of increase in heat transmission coefficient of the aerogel composite even after the compression compared to that before the compression, a small degree of change in heat transmission coefficient even when compressed with a pressure of various pressure values of a low pressure to a high pressure, and heat insulation performance which is maintained at an excellent level. From the results, it has been confirmed that the aerogel composite of the present invention has excellent elastic flexibility and strength of pores, and thus, has excellent resilience even after high-pressure compression, and accordingly, it has been confirmed that sharp degradation in heat insulation performance caused by the destruction of pores, particularly, destruction of pores having a size of 30 nm or less, is prevented, and the heat insulation performance is still maintained excellent even after the compression.

As described above, specific parts of the present invention have been described in detail; however, it is apparent that such detailed descriptions are merely preferred embodiments provided for illustrative purposes to those skilled in the art, and that the scope of the present invention is not limited thereto. Accordingly, the substantial scope of the present invention shall be defined by the appended claims and their equivalents.

## INDUSTRIAL APPLICABILITY

The present invention relates to an aerogel composite that can maintain excellent thermal insulation performance even when compressed under external pressure, without a significant reduction in insulating capability, and to the application of the same as a thermal insulation material. The thermal insulation material can be applied to batteries, electronic devices, automobiles, industrial equipment, or structures.

**Claims**

1. An aerogel composite comprising:

   a fiber substrate, and
   an aerogel including one or more pores,
   wherein when the aerogel composite is compressed by application of pressures of 3 bar, 9 bar, and 24 bar, respectively, in a transverse direction with respect to the aerogel composite, a heat transmission coefficient after the compression is not more than 1.8 times the heat transmission coefficient before the compression, and the heat transmission coefficient before and after the compression of the aerogel composite satisfies Equation 3 below:

   {(Heat transmission coefficient (a) before and after compression - Average value (b) of heat transmission coefficients before and after compression)}= (Average value (b) of heat transmission coefficients before and after compression) X A      [Equation 3]

   wherein the heat transmission coefficient (a) before and after compression is a heat transmission coefficient obtained after performing compression with a pressure of 0 bar, 3 bar, 9 bar, or 24 bar in the transverse direction with respect to the aerogel composite;
   the average value (b) of heat transmission coefficients before and after compression is an average value of heat transmission coefficients obtained after performing compression with pressure values of 0 bar, 3 bar, 9 bar, and 24 bar, respectively, in the transverse direction with respect to the aerogel composite; and
   A is a rational number of from - 0.25 to + 0.25.

2. The aerogel composite of claim 1, wherein when the aerogel composite is compressed by application of pressures of 3 bar, 9 bar, and 24 bar, respectively, in the transverse direction with respect to the aerogel composite, the heat transmission coefficient after the compression is greater than 1 time and not more than 1.8 times the heat transmission coefficient before the compression.

3. The aerogel composite of claim 1, wherein when the aerogel composite is applied with a pressure of 3 bar in the transverse direction with respect to the aerogel composite, the heat transmission coefficient after the compression is not more than 1.45 times the heat transmission coefficient before the compression.

4. The aerogel composite of claim 1, wherein when the aerogel composite is applied with respective pressures of 3 bar, 9 bar, and 24 bar in the transverse direction with respect to the aerogel composite, the compression recovery rate represented by Equation 1 below is 60% or greater:

   Compression recovery rate (%) = {(Cross-sectional thickness of aerogel composite after compression)/(Cross-sectional thickness of aerogel composite before compression)} X 100.      [Equation 1]

5. The aerogel composite of claim 4, wherein when the aerogel composite is applied with respective pressures of 3 bar, 9 bar, and 24 bar in the transverse direction with respect to the aerogel composite, the compression recovery rate represented by Equation 1 below is from 60% to 99%.

6. The aerogel composite of claim 1, wherein the heat transmission coefficient obtained after performing compression with pressures of 3 bar, 9 bar, and 24 bar, respectively, in the transverse direction with respect to the aerogel composite satisfies Equation 4 below:

   (Heat transmission coefficient (c) after compression - Average value (d) of heat transmission coefficients after compression) = (Average value (d) of heat transmission coefficients after compression) X B      [Equation 4]

wherein the heat transmission coefficient (c) after compression is a heat transmission coefficient obtained after performing compression with a pressure of 3 bar, 9 bar, or 24 bar in the transverse direction with respect to the aerogel composite;

the average value (d) of heat transmission coefficients after compression is an average value of heat transmission coefficients obtained after performing compression by applying pressures of 3 bar, 9 bar, and 24 bar, respectively, in the transverse direction with respect to the aerogel composite; and

B is a rational number of from - 0.25 to + 0.25.

7. The aerogel composite of claim 1, wherein a change rate (C) of heat transmission coefficient after performing compression per unit application pressure represented by Equation 5 below on the aerogel composite is a rational number of from - 0.10 to + 0.10:

C = (Heat transmission coefficient after performing compression with pressure of x - Heat transmission coefficient after performing compression with pressure of y)/(x - y)     [Equation 5]

wherein x and y are each independently a pressure value (unit bar) of 3 bar, 9 bar, or 24 bar, and are different from each other.

8. The aerogel composite of claim 1, wherein the aerogel comprises pores having a pore diameter of 30 nm or less at 30% to 45% of pore volume of a framework structure of the aerogel.

9. The aerogel composite of claim 8, wherein the aerogel comprises pores having a pore diameter of 0.1 nm to 30 nm at 30% to 45% of pore volume of a framework structure of the aerogel.

10. The aerogel composite of claim 1, wherein the aerogel comprises pores having a pore diameter of 30 nm or less at 37.5% to 38.5% of pore volume of a framework structure of the aerogel.

11. The aerogel composite of claim 1, wherein the aerogel composite has a density of 0.05 $g/cm^3$ to 0.50 $g/cm^3$.

12. The aerogel composite of claim 1, wherein the aerogel composite has a density of 0.200 $g/cm^3$ to 0.205 $g/cm^3$.

13. The aerogel composite of claim 1, wherein the aerogel is a silica aerogel.

14. The aerogel composite of claim 1, wherein the heat transmission coefficient after the compression is measured after one hour after the completion of the compression.

15. The aerogel composite of claim 6, wherein the heat transmission coefficient after the compression is measured after one hour after the completion of the compression.

16. The aerogel composite of claim 1, wherein when the aerogel composite is applied with a pressure of 3 bar in a transverse direction with respect to the aerogel composite, the heat transmission coefficient after the compression is greater than, or not more than 1.1 times the heat transmission coefficient before the compression, and when the aerogel composite is applied with a pressure of 9 bar, the heat transmission coefficient after the compression is 1.1 to 1.3 times the heat transmission coefficient before the compression, and when the aerogel composite is applied with a pressure of 24 bar, the heat transmission coefficient after the compression is 1.25 to 1.35 times the heat transmission coefficient before the compression.

17. A heat insulation member comprising the aerogel composite of any one of claims 1 to 16.

18. The heat insulation member of claim 17, wherein the heat insulation member further comprises a support member positioned on at least one surface of an upper surface or a lower surface of the aerogel composite.

## INTERNATIONAL SEARCH REPORT

| International application No. |
|---|
| **PCT/KR2024/009126** |

### A. CLASSIFICATION OF SUBJECT MATTER

**C03C 25/16**(2006.01)i; **C03C 25/40**(2006.01)i; **C01B 33/158**(2006.01)i; **B32B 17/04**(2006.01)i; **C01B 33/159**(2006.01)i

According to International Patent Classification (IPC) or to both national classification and IPC

### B. FIELDS SEARCHED

Minimum documentation searched (classification system followed by classification symbols)

C03C 25/16(2006.01); B01J 27/04(2006.01); B32B 5/30(2006.01); C01B 33/145(2006.01); C01B 33/158(2006.01); C03C 25/25(2018.01); D06M 11/79(2006.01); F16L 59/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에어로겔(aerogel), 섬유(fiber), 기공(pore), 열관류율(thermal transmittance)

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0038375 A (LG CHEM, LTD.) 07 April 2021 (2021-04-07) <br> See claim 1; and paragraph [0068]. | 1-18 |
| A | KR 10-1928538 B1 (SKC CO., LTD.) 13 December 2018 (2018-12-13) <br> See claim 1. | 1-18 |
| A | WO 2022-126279 A1 (TEXAVIE TECHNOLOGIES INC.) 23 June 2022 (2022-06-23) <br> See claims 1-30. | 1-18 |
| A | KR 10-2022-0137360 A (LG CHEM, LTD.) 12 October 2022 (2022-10-12) <br> See claims 1-12. | 1-18 |
| A | KR 10-1993643 B1 (LG CHEM, LTD.) 27 June 2019 (2019-06-27) <br> See claims 1, 7 and 8. | 1-18 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **18 October 2024** | **18 October 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/009126**

| Patent document cited in search report | Publication date (day/month/year) | Patent family member(s) | | | Publication date (day/month/year) |
|---|---|---|---|---|---|
| KR 10-2021-0038375 A | 07 April 2021 | CN | 113165978 | A | 23 July 2021 |
| | | CN | 113226677 | A | 06 August 2021 |
| | | CN | 113382962 | A | 10 September 2021 |
| | | CN | 113382962 | B | 30 January 2024 |
| | | CN | 113396134 | A | 14 September 2021 |
| | | CN | 113396134 | B | 11 November 2022 |
| | | CN | 113423676 | A | 21 September 2021 |
| | | CN | 113423676 | B | 07 March 2023 |
| | | CN | 113423677 | A | 21 September 2021 |
| | | CN | 113423677 | B | 11 July 2023 |
| | | CN | 113853361 | A | 28 December 2021 |
| | | CN | 113853361 | B | 04 November 2022 |
| | | CN | 114007999 | A | 01 February 2022 |
| | | CN | 117819557 | A | 05 April 2024 |
| | | EP | 3878811 | A1 | 15 September 2021 |
| | | EP | 3878811 | B1 | 17 April 2024 |
| | | EP | 3882214 | A1 | 22 September 2021 |
| | | EP | 3882214 | B1 | 08 November 2023 |
| | | EP | 3901091 | A1 | 27 October 2021 |
| | | EP | 3901091 | B1 | 27 March 2024 |
| | | EP | 3901092 | A1 | 27 October 2021 |
| | | EP | 3901093 | A1 | 27 October 2021 |
| | | EP | 3901093 | B1 | 10 May 2023 |
| | | EP | 3901094 | A1 | 27 October 2021 |
| | | EP | 3901094 | B1 | 26 June 2024 |
| | | EP | 4026802 | A1 | 13 July 2022 |
| | | EP | 4026803 | A1 | 13 July 2022 |
| | | EP | 4424637 | A2 | 04 September 2024 |
| | | JP | 2022-503551 | A | 12 January 2022 |
| | | JP | 2022-515436 | A | 18 February 2022 |
| | | JP | 2022-518063 | A | 11 March 2022 |
| | | JP | 2022-518064 | A | 11 March 2022 |
| | | JP | 2022-518787 | A | 16 March 2022 |
| | | JP | 2022-518813 | A | 16 March 2022 |
| | | JP | 2022-541827 | A | 27 September 2022 |
| | | JP | 2022-542868 | A | 07 October 2022 |
| | | JP | 2023-156350 | A | 24 October 2023 |
| | | JP | 7105367 | B2 | 22 July 2022 |
| | | JP | 7209852 | B2 | 20 January 2023 |
| | | JP | 7209853 | B2 | 20 January 2023 |
| | | JP | 7229371 | B2 | 27 February 2023 |
| | | JP | 7317120 | B2 | 28 July 2023 |
| | | JP | 7320664 | B2 | 03 August 2023 |
| | | JP | 7322156 | B2 | 07 August 2023 |
| | | JP | 7530419 | B2 | 07 August 2024 |
| | | KR | 10-2021-0028081 | A | 11 March 2021 |
| | | KR | 10-2021-0028082 | A | 11 March 2021 |
| | | KR | 10-2021-0028083 | A | 11 March 2021 |
| | | KR | 10-2021-0028127 | A | 11 March 2021 |
| | | KR | 10-2021-0028129 | A | 11 March 2021 |

Form PCT/ISA/210 (patent family annex) (July 2022)

## INTERNATIONAL SEARCH REPORT
### Information on patent family members

| International application No. |
| --- |
| **PCT/KR2024/009126** |

| Patent document cited in search report | | | Publication date (day/month/year) | Patent family member(s) | | | Publication date (day/month/year) |
| --- | --- | --- | --- | --- | --- | --- | --- |
| | | | | KR | 10-2021-0028131 | A | 11 March 2021 |
| | | | | KR | 10-2021-0028132 | A | 11 March 2021 |
| | | | | KR | 10-2021-0038374 | A | 07 April 2021 |
| | | | | KR | 10-2487009 | B1 | 11 January 2023 |
| | | | | KR | 10-2555087 | B1 | 17 July 2023 |
| | | | | KR | 10-2574283 | B1 | 05 September 2023 |
| | | | | KR | 10-2581268 | B1 | 22 September 2023 |
| | | | | KR | 10-2583201 | B1 | 27 September 2023 |
| | | | | KR | 10-2622331 | B1 | 09 January 2024 |
| | | | | KR | 10-2623026 | B1 | 10 January 2024 |
| | | | | US | 12053753 | B2 | 06 August 2024 |
| | | | | US | 12090460 | B2 | 17 September 2024 |
| | | | | US | 12097478 | B2 | 24 September 2024 |
| | | | | US | 2022-0064010 | A1 | 03 March 2022 |
| | | | | US | 2022-0072734 | A1 | 10 March 2022 |
| | | | | US | 2022-0080377 | A1 | 17 March 2022 |
| | | | | US | 2022-0098046 | A1 | 31 March 2022 |
| | | | | US | 2022-0204350 | A1 | 30 June 2022 |
| | | | | US | 2022-0227635 | A1 | 21 July 2022 |
| | | | | US | 2022-0250922 | A1 | 11 August 2022 |
| | | | | US | 2022-0371902 | A1 | 24 November 2022 |
| | | | | US | 2024-0228304 | A1 | 11 July 2024 |
| | | | | WO | 2021-045356 | A1 | 11 March 2021 |
| | | | | WO | 2021-045483 | A1 | 11 March 2021 |
| | | | | WO | 2021-045484 | A1 | 11 March 2021 |
| | | | | WO | 2021-045514 | A1 | 11 March 2021 |
| | | | | WO | 2021-045528 | A1 | 11 March 2021 |
| | | | | WO | 2021-045533 | A1 | 11 March 2021 |
| | | | | WO | 2021-066482 | A1 | 08 April 2021 |
| | | | | WO | 2021-066492 | A1 | 08 April 2021 |
| KR | 10-1928538 | B1 | 13 December 2018 | | None | | |
| WO | 2022-126279 | A1 | 23 June 2022 | CA | 3198021 | A1 | 23 June 2022 |
| | | | | CN | 116997462 | A | 03 November 2023 |
| | | | | EP | 4264111 | A1 | 25 October 2023 |
| | | | | JP | 2024-501236 | A | 11 January 2024 |
| | | | | KR | 10-2023-0146518 | A | 19 October 2023 |
| | | | | US | 2024-0042731 | A1 | 08 February 2024 |
| KR | 10-2022-0137360 | A | 12 October 2022 | CN | 116261555 | A | 13 June 2023 |
| | | | | EP | 4186861 | A1 | 31 May 2023 |
| | | | | EP | 4186861 | A4 | 03 April 2024 |
| | | | | JP | 2023-543245 | A | 13 October 2023 |
| | | | | US | 2023-0331560 | A1 | 19 October 2023 |
| | | | | WO | 2022-211353 | A1 | 06 October 2022 |
| KR | 10-1993643 | B1 | 27 June 2019 | CN | 107709235 | A | 16 February 2018 |
| | | | | CN | 107709235 | B | 05 May 2020 |
| | | | | CN | 111501335 | A | 07 August 2020 |
| | | | | CN | 111501335 | B | 28 March 2023 |
| | | | | EP | 3284721 | A1 | 21 February 2018 |
| | | | | EP | 3284721 | A4 | 09 May 2018 |
| | | | | EP | 3284721 | B1 | 16 December 2020 |

Form PCT/ISA/210 (patent family annex) (July 2022)

**INTERNATIONAL SEARCH REPORT**
Information on patent family members

International application No.

**PCT/KR2024/009126**

| Patent document cited in search report | Publication date (day/month/year) | Patent family member(s) | | Publication date (day/month/year) |
|---|---|---|---|---|
| | | JP 2019-501850 | A | 24 January 2019 |
| | | JP 6722283 | B2 | 15 July 2020 |
| | | KR 10-1964894 | B1 | 05 April 2019 |
| | | KR 10-1993642 | B1 | 27 June 2019 |
| | | KR 10-2017-0104914 | A | 18 September 2017 |
| | | KR 10-2017-0104954 | A | 18 September 2017 |
| | | KR 10-2017-0104955 | A | 18 September 2017 |
| | | KR 10-2017-0104956 | A | 18 September 2017 |
| | | US 11274044 | B2 | 15 March 2022 |
| | | US 2018-0134566 | A1 | 17 May 2018 |
| | | WO 2017-155311 | A1 | 14 September 2017 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230083943
- KR 1020230097729
- US 386103
- US 18386108 B